# EUROPÄISCHE PATENTSCHRIFT

(11) **EP 2 324 964 B1**
(45) Veröffentlichungstag und Bekanntmachung des Hinweises auf die Patenterteilung: **22.08.2012**
(21) Anmeldenummer: 10004071.6
(22) Anmeldetag: 16.04.2010
(51) Int. Cl.: B25J 9/02, B25J 9/10

(54) **Antriebsvorrichtung mit kaskadierten Antriebseinrichtungen für ein massearmes Robotiksystem**
Drive assembly with cascaded drive devices for a low-weight robotics system
Dispositif d'entraînement avec installations d'entraînement en cascade pour un système de robotique de faible poids

(30) Priorität: 18.11.2009 DE 102009053536
(43) Veröffentlichungstag der Anmeldung: 25.05.2011
(73) Patentinhaber: Elektrotechnik Bernhard Peter, 93077 Bad Abbach (DE)
(72) Erfinder: Bernhard, Peter, 93077 Bad Abbach (DE)
(74) Vertreter: advotec.

(56) Entgegenhaltungen:
- EP-A1- 1 566 243
- WO-A1-97/02931
- DE-A1- 4 444 523
- DE-A1- 10 017 041

## Beschreibung

Die Erfindung geht aus von einer Antriebseinrichtung, einer Antriebsvorrichtung und einem Antriebsverfahren für ein massearmes Robotiksystem, das eine feststehende Trägeranordnung, an der zumindest eine Schlittenanordnung in zumindest einer Antriebsachsenrichtung längs verschieblich verfahrbar angeordnet ist, umfasst, wobei an der Trägeranordnung zumindest zwei Antriebseinheiten stationär angeordnet sind.

Aus dem Stand der Technik sind Antriebsvorrichtungen für Robotiksysteme bekannt, bei welchen für jede Bewegung entlang einer Antriebsachsenrichtung eine eigene Antriebseinrichtung, d.h. eine Einrichtung für die Ausführung zumindest einer Bewegung eines Roboterelements entlang einer Antriebsachsenrichtung vorgesehen ist. Eine Antriebseinrichtung umfasst für die Kraftübertragung zwischen einer oder mehreren Antriebseinheiten, beispielsweise einem oder mehreren Antriebsmotoren, Antriebszylindern oder ähnlichem und einem oder mehreren anzutreibenden Mitteln, beispielsweise einem oder mehreren verschiebbaren Schlitten oder Kraftabtriebsmitteln ein einziges Kraftübertragungsmittel wie Antriebsriemen, Antriebskette, Antriebswelle etc.. Eine Antriebsvorrichtung umfasst zur Realisierung von Roboterfunktionen eine oder mehrere miteinander kombinierte Antriebseinrichtungen. Üblicherweise sind eine oder mehrere Antriebseinheiten einer Antriebsvorrichtung auf einer verfahrbaren Schlittenanordnung angeordnet, sodass für jede Antriebsachsenrichtung eine oder mehrere Antriebseinheiten, die in Richtung einer vorgelagerten Antriebsachsenrichtung mitbewegt werden, vorgesehen sind. So kann beispielsweise ein erster Schlitten einer ersten Antriebseinrichtung in X-Richtung mit einem Antriebsmotor als Antriebseinheit verfahrbar sein, wobei relativ hierzu ein zweiter Schlitten einer zweiten Antriebseinrichtung relativ zum ersten Schlitten in Y-Richtung verfahrbar angeordnet ist, wobei die zweite Antriebseinrichtung wiederum einen eigenen Antriebsmotor als Antriebseinheit auf dem ersten oder zweiten Schlitten trägt. Die Antriebseinheit der zweiten Antriebseinrichtung wird gegenüber der Antriebseinheit der ersten Antriebseinheit verfahren.

Des Weiteren sind Antriebseinrichtungen bekannt, bei denen zwei Linearbewegungen mittels eines einzigen Antriebsriemens als Kraftübertragungsmittel übertragen werden, wobei zwei Antriebseinheiten auf einer stationären Trägereinrichtung angeordnet sind. Diese Antriebsvorrichtung verwirklicht ein sogenanntes LL-Prinzip (Linear-Linear-Prinzip), da zwei lineare Antriebsbewegungen zur Verfügung gestellt werden. So geht aus der DE 10017041 A1 eine X-Y Antriebseinrichtung hervor, die mittels zweier stationären Antriebsmotoren und einem Antriebsriemen, der an einem Schlitten festgelegt ist, eine Verfahrbarkeit des Schlittens entlang einer X- und Y Antriebsachsenrichtung ermöglicht.

Antriebsvorrichtungen, die hohe Beschleunigungen, geringen Energieverbrauch und große Verfahrbereiche abdecken können, sollten möglichst geringe bewegte Massen aufweisen. Hierzu sind aus dem Stand der Technik sogenannte Delta-/Scararoboter bekannt, die mittels Hubstangen zumeist triangulare Antriebsachsenrichtungen bereitstellen, um X-Y-kreisförmige und Z-Hubsenk-Bewegungen auszuführen, um geringe Arbeitslasten in einem äußerst eingeschränkten Arbeitsbereich bewegen können. Hierbei entstehen aufgrund des kreisförmigen Arbeitsbereichs große Totbereiche in der X-Y-Ebene. Daneben werden Roboter nach dem Gantry-Prinzip vorgeschlagen, die zwei feststehende Motoren und einen Antriebsriemen aufweisen, um eine Verfahrbarkeit in zumindest einer Antriebsachsenrichtung bereitstellen zu können. Jedoch müssen diese Roboter für eine Bewegung entlang einer zweiten Antriebsachsenrichtung eine weitere Antriebseinheit mit eigenem Antrieb auf einem Schlitten aufweisen, die mit der ersten Antriebsachseneinrichtung verfahrbar ist, entsprechend dem oben dargestellten Antriebskonzept des Stands der Technik. Selbst wenn die Masse der aufgesetzten Antriebseinrichtung in der Gesamtheit einen kleinen Faktor spielt, ist das Problem der Energiezuführung und auch der auftretenden hohen Beschleunigungskräfte auf die vorgelagerte Antriebseinheit nicht zu vernachlässigen.

In einem Robotiksystem sind üblicherweise die X-, Y- und Z-Richtung die bevorzugten Antriebsachsenrichtungen, wobei in vielen Fällen auch eine sogenannte C-Bewegung, d. h. eine Rotation um eine Z-Achse, erwünscht ist. Des Weiteren können auch A- und B-Bewegungen, d.h. Rotationen um die X- oder Y-Richtung, erwünscht sein, oder motorische Werkzeug-Greiferbewegungen erforderlich sein. Hierzu sind rotierende oder umgelegte Rotationsbewegungen notwendig, die üblicherweise durch eine eigene Antriebseinheit, in den meisten Fällen einen eigenen Antriebsmotor, bereitgestellt werden müssen.

Aus der EP 1 566 243 A1 geht eine Antriebseinrichtung für ein Robotiksystem hervor, bei der mittels einer koordinierten Bewegung zweier an einer feststehenden Trägeranordnung angeordneten Antriebsmotoren und eines geschlossenen Antriebsriemens, der die Antriebsmotoren und einen ersten Schlitten über Umlenkrollen verbindet, der erste Schlitten in einer ersten Antriebsachse verfahren und eine auf dem ersten Schlitten befindliche Abtriebswelle rotatorisch angetrieben werden kann. Für eine Verfahrbarkeit des ersten Schlittens in eine zweite Antriebsrichtung wird die Verwendung eines Doppelschlittens, umfassend den ersten Schlitten und einen zweiten Schlitten, als Schlittenanordnung vorgeschlagen, wobei der erste Schlitten mittels des zweiten Schlittens in die zweite, zur ersten Antriebsrichtung rechtwinklige, Achsenrichtung mittels eines dritten mit dem Antriebsriemen verkoppelten Antriebsmotors, der auf dem zweiten Schlitten angeordnet ist, verfahren werden kann.

Aufgabe der Erfindung ist es, eine Antriebsvorrichtung, die mehrere Antriebseinrichtungen umfasst, für ein Robotiksystem vorzuschlagen, in dem die Antriebseinheiten, insbesondere Antriebsmotoren, Antriebszylinder oder Ähnliches, feststehend in einer Trägeranordnung untergebracht sind, sodass eine bewegte Schlitten anordnung eine geringe Masse und damit hohe Beschleunigungen erreichen kann, wobei das Trägheitsmoment der bewegten Massen möglichst gering ist. Des Weiteren ist es Aufgabe der Erfindung, eine Antriebsvorrichtung vorzuschlagen, in der leistungsschwache Motoren für eine hohe Arbeitsleistung und einen großen Arbeitsbereich eingesetzt werden können, die Gefahr von Kabelbrüchen durch Übertragung von elektrischer Energie in bewegte Teile der Robotikvorrichtung vermieden werden kann, ein geringer Platzbedarf, ein großer rechteckiger Arbeitsbereich, niedrige Betriebskosten, niedrige Anschaffungskosten, sowie eine modulare Skalierbarkeit und Einsetzbarkeit in Standardautomationskomponenten erreicht werden kann.

Diese Aufgabe wird durch eine Antriebsvorrichtung für ein massearmes Robotiksystem gemäβ Anspruch 1 gelöst. Weitere vorteilhafte Ausgestaltungen sind Gegenstände der abbhängigen Ansprüche.

Erfindungsgemäß umfasst die Antriebsvorrichtung zwei Antriebseinrichtungen für ein massearmes Robotiksystem, eine feststehende Trägeranordnung, an der zumindest eine Schlittenanordnung in zumindest einer Antriebsachseneinrichtung längs verschieblich verfahrbar angeordnet ist, wobei an der Trägeranordnung zumindest zwei Antriebseinheiten, insbesondere Antriebsmotoren, Antriebszylinder oder Ähnliches, stationär angeordnet sind. Die Antriebseinrichtung zeichnet sich dadurch aus, dass an der Schlittenanordnung zumindest ein rotierbares Kraftabtriebsmittel, insbesondere eine Abtriebswelle, Antriebszahnrad oder Ähnliches, angeordnet ist, und die Antriebeinheiten mittels eines in sich geschlossenen Kraftübertragungsmittels, insbesondere eines geschlossenen Antriebsriemens, Antriebskette, Antriebsseilzuges oder Ähnliches, miteinander und mit dem Kraftabtriebsmittel über ein oder mehrere Umlenkeinheiten, insbesondere Umlenkrollen, Umlenkzahnräder oder Ähnliches, verbunden sind, wobei mittels einer kombinierten Antriebsbewegung der Antriebseinheiten eine lineare Verfahrbewegung der Schlittenanordnung entlang der Antriebsachse und/oder eine rotatorische Abtriebsbewegung des Kraftabtriebsmittels um eine Rotationsachse erzeugbar ist. Mit anderen Worten betrifft die Antriebseinrichtung ein sogenanntes RL-Prinzip (Rotierend-Linear Prinzip) bei dem zumindest zwei Antriebseinheiten, insbesondere Antriebsmotoren, Antriebszylinder oder Ähnliches, fest an einer Trägeranordnung angeordnet sind, und über Umlenkeinheiten und ein flexibles geschlossenes Kraftübemagungsmittel in Form eines geschlossenen Antriebsriemens, Antriebskette, Antriebsseilzuges oder Vergleichbares, miteinander und mit einer Schlittenanordnung verbunden sind. Durch eine kombinierte Antriebsbewegung der beiden Antriebseinheiten kann zum einen eine lineare Verfahrbarkeit des einen oder der mehreren Schlitten der Schlittenanordnung bezüglich der Trägeranordnung erreicht werden, sowie eine rotatorische Abriebsbewegung eines auf zumindest einem der Schlitten der Schlittenanordnung angeordneten Kraftabtriebsmittels erzeugt werden. Somit sind die Antriebseinheiten, insbesondere Motoren oder Antriebszylinder, als große Massebestandteile der Antriebseinrichtung außerhalb des beweglichen Schlittens an einer unbeweglichen Trägeranordnung stationär angeordnet und die Antriebbewegung der Schlitten wird mittels eines geschlossenen Kraftübertragungsmittels, insbesondere Zahnriemens o. ä., auf die Schlittenanordnung übertragen, die sowohl eine rotatorische Bewegung eines Kraftabtriebsmittels als auch eine lineare Schlittenbewegung entlang einer Antriebsachseneinrichtung ausführen kann. Hierdurch ist das Trägheitsmoment der Schlittenanordnung verringert, da die massebehafteten Antriebseinheiten im stationären Teil der Antriebseinrichtung angeordnet sind. Eine oder mehrere dieser Antriebseinrichtungen lassen sich kaskadiert kombinieren, so dass mehrere lineare verfahrbare und rotatorische Abtriebsbewegungen mittels mehrerer Antriebseinheiten, die stationär an der Trägeranordnung angebracht sind, und mehrere Kraftübertragungsmittel erzeugt werden können. Eine kombinierte Bewegung der Antriebseinheiten kann grundsätzlich eine gleichgerichtete oder eine entgegengerichtete Bewegung der Antriebseinheiten mit gleicher und/oder verschiedener Bewegungsgeschwindigkeit bedeuten, wodurch eine separierte lineare Verfahrbarkeit und Rotation bzw. eine kombinierte Verfahrbarkeit und Rotation bei gleichen bzw. unterschiedlichen Bewegungsgeschwindigkeiten der Antriebseinheiten erreicht werden können.

Somit betrifft die Erfindung eine Antriebsvornchtung für ein massearmes Robotiksystem, wobei die Antriebsvorrichtung zumindest zwei Antriebseinrichtungen zur Ausführung von zumindest zwei linearen Verfahrbewegungen der Schlittenanordnung entlang von zumindest zwei Antriebsachsenrichtungen und zumindest einer rotatorischen Abtriebsbewegung für eine Roboterarbeitsfunktion umfasst. Somit schlägt die Erfindung vor, zumindest zwen Antriebseinrichtungen zu einer Antriebsvorrichtung zusammenzufassen, um die jeweils bereitgestellten linearen Antriebsbewegungen und rotatorischen Abtriebsbewegungen zur Realisierung einer Roboterarbeitsfunktion zu kombinieren. Beispielsweise entsteh bei Verwendung einer Kreuzschlittenanordnung für die nicht angetriebene Freilaufbewegungsachse, die um 90° zur Antriebsachsenrichtung versetzt ist, ein Freilauf, der eine undefinierte Positionierung beispielsweise einer X-Antriebsachsenrichtung entlang einer Y-Freilaufachsenrichtung entstehen lässt, so dass eine Hemmung oder Blockierung der Freilaufachsenrichtung vorgesehen sein sollte. Des Weiteren muss bei Kombinationen zweier oder mehrerer Antriebseinrichtungen darauf geachtet werden, dass bezüglich der realisierten Verfahrbewegung keine Hemmung der gewünschten Antriebsachsenrichtung auftritt, d.h. die übrigen Antriebseinrichtungen einen Freilauf bezüglich der Antriebsachsenrichtung der betrachteten Antriebseinrichtung bereitstellen. Dies kann beispielsweise durch Anordnung der Antriebseinheiten jeder Antriebseinrichtung auf alternativen Positionen der Antriebseinheiten bezüglich der Trägeranordnung realisiert werden. Eine weitere Kaskadierungsmöglichkeit von Antriebseinheiten mehrerer Antriebseinrichtungen innerhalb einer Antriebsvorrichtung ist durch ein sogenanntes "Splitting" möglich, bei den Linearbewegungen entlang einer Antriebsachsenrichtung parallel und unabhängig ausgeführt werden. So können bezüglich einer festen Trägeranordnung innerhalb einer Antriebsebene zwei oder mehrere unabhängige betreibbare Schlitten entlang einer einzigen Antriebsachsenrichtung verfahrbar sein, so dass in dieser einen Antriebsachsenrichtung voneinander unabhängige Linearbewegungen erzeugt werden können, wobei der Verfahrweg deutlich vergrößert werden kann. Die jeweils zur Verfügung gestellten rotierenden Abtriebsbewegungen jeder Antriebseinrichtung können frei an jeder Umlenkeinheit abgegriffen werden, wobei beispielsweise rotierende Bewegungen auf zwei oder mehrere Schlitten einer Schlittenanordnung verteilt werden können. Diese können an einer gemeinsamen Rotationsachse (Wurzelpunkt) zusammengeführt werden und beispielsweise mittels einer Hohlwellenanordnung zur Realisierung verschiedenartigster Robotikfunktion, wie beispielsweise Greiferbewegungen, miteinander kombiniert werden. Die multidimensionale Komplexität bezüglich einer koordinierten Antriebssteuerung aller Antriebseinheiten einer Antriebsvorrichtung zur Bereitstellung schneller kombinierter Robotikverfahrbewegungen kann durch Transformation auf der Steuerungsseite gelöst werden.

Hierzu kann die Schlittenanordnung insbesondere im Wesentlichen rechtwinklig zueinander verfahrbare Schlitten umfassen.

Die Kombination zumindest zweier Antriebseinrichtungen stellt somit zumindest zwei lineare Verfahrbewegungen und mindestens zwei rotatorische Abtriebsbewegungen zur Verfügung, wobei die zumindest notwendigen Antriebseinheiten auf einer gemeinsamen Trägeranordnung angeordnet sind und die Kraftübertragung mittels zumindest zweier unabhängiger geschlossener Kraftübertragungsmittel erfolgt. Hiermit lässt sich eine X-Y-Verfahrbarkeit sowie eine oder zwei rotatorische Kraftabtriebsbewegungen beispielsweise zur Realisierung einer Greiferbewegung bereitstellen.

Entsprechend eines vorteilhaften Ausführungsbeispiels einer Antriebseinrichtung sind die beiden Antriebseinheiten am gleichen Ende oder an entgegengesetzten Enden der Trägeranordnung bzgl. eines Verfahrwegs der Schlittenanordnung entlang der Antriebsachseneinrichtung angeordnet. Befinden sich die beiden Antriebseinheiten am gleichen Ende des Verfahrwegs der Schlittenanordnung an der Trägerordnung, so kann die Länge des Verfahrwegs, die durch die Länge des geschlossenen Kraftüberiragungsmittels bestimmt ist, vollkommen ausgeschöpft werden. Werden die beiden Antriebseinheiten an entgegengesetzten Enden der Trägeranordnung angeordnet, so definieren die Abstände der Antriebseinheiten zueinander in der Regel die Länge des Verfahrweges, wobei eine Anordnung an dem gleichen Ende gegenüber einer Anordnung an entgegengesetzten Enden grundsätzlich eine Vorzeichenumkehr der Antriebsbewegung der Antriebseinheit zur Erzeugung einer linearen Verfahrbarkeit bzw. rotatorischen Abtriebsbewegung notwendig macht.

Gemäß eines weiteren vorteilhaften Ausführungsbeispiels ist die Schlittenanordnung in einer ersten Freilaufachsenrichtung, insbesondere in einer zur ersten Antriebsachseneinrichtung im Wesentlichen rechtwinkligen Freilaufachseneinrichtung, gegenüber der Trägeranordnung freilaufend verschiebbar. Durch eine kombinierte Bewegung der Antriebseinheiten wird eine lineare Verfahrbarkeit entlang einer X- oder Y-Antriebsachseneinrichtung gewährleistet Dementsprechend ergibt sich in der zweiten hierzu rechtwinkligen Achsenrichtung ein Freilauf, wobei bei einer dreidimensionalen Ausgestaltung von Trägeranordnung und Schlittenführung sogar zwei Freilaufachsenrichtungen verfügbar sind. Dies ermöglicht die Kombination zweier oder mehrerer kaskadierter Antriebseinrichtungen zu einer Antriebsvorrichtung, die zwei oder mehrere lineare Verfahrbewegungen der Schlittenanordnungen entlang einer X-Y- und/oder Z-Antriebsachsenrichtung ermöglicht.

Anknüpfend an das vorangegangene Ausführungsbeispiel ist es weiterhin vorteilhaft denkbar, dass die Schlittenanordnung entlang einer zweiten Freilaufachseneinrichtung, insbesondere einer ebenfalls zur Antriebsachseneinrichtung und zur ersten Freilaufachsenrichtung im Wesentlichen rechtwinkligen Freilaufeinrichtung, gegenüber der Trägeranordnung freilaufend verschiebbar ist. In einer solchen Ausführungsform lässt sich eine dreidimensionale Verfahrbarkeit eines Schlittens einer Schlittenanordnung gegenüber der Trägeranordnung erreichen, wobei entlang einer Antriebsachseneinrichtung die beiden Antriebseinheiten der Antriebseinrichtung eine Verfahrbarkeit realisieren, und zwei im Wesentlichen rechtwinklige Freilaufachsenrichtungen, die orthogonal zur Antriebsachsenrichtung verbleiben, vorgesehen sind, bezüglich derer mittels Kaskadierung weiterer Antriebseinrichtungen eine dreidimensionale gesteuerte Verfahrbarkeit eines Robotiksystems bereitgestellt werden kann.

Die Ausführung der rotatorischen Bewegung des Kraftabtriebsmittels ist grundsätzlich beliebig. In einem bevorzugten Ausführungsbeispiel kann das Kraftabtriebsmittel zur Bereitstellung zumindest einzelner Funktionen einer Greifereinrichtung verwendet werden. Alternativ oder zusätzlich kann das Kraftabtriebsmittel mit einem Aggregatmittel, insbesondere einem Stromgenerator, einer Druckluftpumpe, einer Vakuumerzeugungspumpe o. ä., zum Antrieb des Aggregatsmittels angeschlossen sein. Zusätzlich hierzu oder alternativ kann das Kraftabtriebsmittel mit einer Werkzeugeinrichtung zur Ausführung zumindest einer Werkzeugbewegung, insbesondere einer rotatorischen und/oder linearen Werkzeugbewegung, wie Bohren, Schleifen, Polieren o. ä., angeschlossen sein. Alternativ oder zusätzlich kann das Kraftabtriebsmittel mit einer linearen Bewegungseinrichtung, insbesondere einer Hubspindel zur Umsetzung einer Rotations- in eine Linearbewegung, insbesondere zur linearen Verfahrbarkeit der Schlittenanordnung in einer weiteren Antriebsachsenrichtung, angeschlossen sein. Mittels der vorgenannten Abtriebskonzepte kann die rotatorische Abtriebsbewegung des Kraftabtriebsmittels vorteilhaft zur Realisierung von Roboterfunktion, wie Greiferfunktion, Aggregatantrieb zur Erzeugung von Strom, Druckluft, Vakuum o. ä., Betrieb eines Werkzeugs, insbesondere eines rotatorischen oder linear betriebenen Werkzeugs, beispielsweise eines Bohrers, Schleifers oder Polierers, oder Erzeugung einer weiteren Linearbewegungsrichtung zumindest eines Teils der Schlittenanordnung eingesetzt werden. Hierzu kann neben der linearen Verfahrbarkeit eine vielgestaltige Verwendung der rotatorischen Abtriebsbewegung, die durch die R/L-Antriebseinrichtung zur Verfügung gestellt wird, erreicht werden. Ein solches Kraftabtriebsmittel kann eine Drehwelle, Hubspindel, Zahnradgetriebe, Hohlwelle oder ein ähnliches bekanntes mechanisches Drehabtriebsmittel sein.

Anknüpfend an das vorherige Ausführungsbeispiel, in dem zwei oder mehrere Antriebseinrichtungen miteinander kombiniert sind, ist es vorteilhaft, dass die Kraftübertragungsmittel der Antriebseinrichtungen bzgl. einer Ebene der Trägeranordnung nebeneinander oder/und übereinander, insbesondere in einer Sandwichbauweise kaskadierbar, angeordnet sind. Sind die Kraftübertragungsmittel übereinander angeordnet, so wird jeder Antriebseinrichtung eine neue Antriebsebene zugeordnet, in der die rotatorische und lineare Verfahrbewegung umgesetzt wird. Sind die Kraftübertragungsmittel nebeneinander, insbesondere verschränkt zueinander angeordnet, so können in einer Antriebsebene zwei lineare Verfahrbewegungen und/oder zwei rotatorische Abtriebsbewegungen zur Verfügung gestellt werden, wodurch eine kompakte Bauweise der Antriebsvorrichtung erreicht werden kann.

Grundsätzlich kann die rotatorische Abtriebsbewegung der Kraftabtriebsmittel zweier oder mehrerer Antriebseinrichtungen einer Antriebsvorrichtung entlang beliebiger Rotationsachsen erfolgen. Besonders vorteilhaft können die mindestens zwei Kraftabtriebsmittel bezüglich einer gemeinsamen Rotationsachse angeordnet sein, und insbesondere mittels einer Hohlwellenanordnung eine kombinierbare Abtriebsbewegung zum Betrieb eines oder mehrerer Werkzeug- oder Greifereinrichtungen und/oder einer oder mehrerer weiterer auf der Schlittenanordnung bereitgestellter mitbewegter Antriebseinrichtungen dienen. Alternativ hierzu oder auch kombinierbar ist es durchaus denkbar, dass die mindestens zwei Kraftabtriebsmittel mittels einer Dreh-Hubeinrichtung, insbesondere einer Drehhubspindel oder einer Drehhubstange eine kombinierbare lineare und rotatorische Antriebsbewegung bereitstellen. Somit schlägt dieses Ausführungsbeispiel kombinierbar oder auch einzeln ein Abtriebskonzept bezüglich einer gemeinsamen Rotationsachse durch Verwendung insbesondere einer Hohlwelle vor, um zwei oder mehrere rotatorische Abtriebsbewegungen zur Erfüllung einer Robotikfunktion verwendbar zu machen. Des Weiteren schlägt das Ausführungsbeispiel vor, eine Dreh-Hubeinrichtung zu verwenden, um sowohl eine lineare als auch eine rotatorische Antriebsbewegung mittels zweier rotatorischer Abtriebsbewegungen zur Verfügung stellen zu können.

Gemäß einem weiteren bevorzugten Ausführungsbeispiel umfasst die Antriebsvorrichtung eine Trägerebene der Trägeranordnung, und zumindest zwei Antriebsebenen der Schlittenanordnung, so dass bezüglich der feststehenden Trägeranordnung zwei Antriebsebenen der Schlittenanordnung ausgebildet sind. Somit lässt sich beispielsweise eine X-Y-Verfahrbarkeit der Antriebsvorrichtung erreichen, indem bezüglich einer feststehenden Trägerebene eine erste Antriebsebene der Schlittenanordnung in X- und eine zweite Antriebsebene in Y-Richtung verfahrbar ist, so dass die beiden Schlitten gegeneinander und gegenüber der Trägerebene verfahrbar sein können. Hierdurch lässt sich in äußerst einfacher Art und Weise eine X-Y-Verfahrbarkeit der Antriebsvorrichtung realisieren, wobei jede Ebene leicht zugänglich und einfach wartbar ist.

Entsprechend eines weiteren bevorzugten Ausführungsbeispieles umfasst die Vorrichtung zur Bereitstellung einer zweiachsigen Verfahrbarkeit und einer Scherenhubfunktion bzgl. einer dritten Achse drei Antriebseinrichtungen und zwei Schlitten als Schlittenanordnung, wobei eine erste Antriebseinrichtung eine lineare X-Verfahrbarkeit der beiden Schlitten und eine zweite und eine dritte Antriebseinrichtung eine Y1 bzw. Y2-Verfahrbarkeit des Schlittens zur Bereitstellung einer linearen X- und Y-Verfahrbarkeit sowie zur Bereitstellung zumindest einer rotatorischen Abtriebsbewegung umfasst. Entsprechend dieses Ausführungsbeispiels lässt sich unter Einsatz dreier erfindungsgemäßer Antriebseinrichtungen eine X, Y und Z-Verfahrbarkeit eines Robotiksystems sowie drei voneinander unabhängige rotatorische Kraftabtriebsbewegungen miteinander kombinieren, um vielfältigste Roboterarbeitsfunktionen bereitstellen zu können. Hierbei können aufgrund der geringen zu bewegenden Massen hohe Fahrgeschwindigkeiten und große Antriebskräfte zur Verfügung gestellt werden.

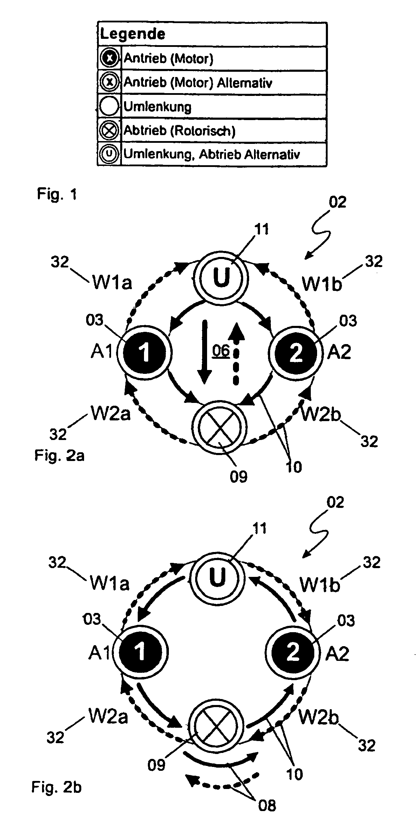

In Fig. 2a und 2b ist schematisch der Ablauf des Antriebsverfahrens einer der Antriebseinrichtungen der erfindungsgemäßen Antriebsvorrichtung dargestellt: Hierbei wird die lineare Verfahrbewegung nach Fig. 2a durch eine synchrone Verkürzung der Wirkstrecken W1a, W1b bzw. W2a, W2b des Kraftübertragungsmittels 10 erreicht, so dass das auf der Schlittenanordnung angeordnete rotatorische Kraftabtriebsmittel 09 und die Umlenkeinheit 11 des Kraftübertragungsmittels 10 gegenüber den an der Trägereinrichtung feststehenden Antriebseinheiten 03 linear verfahren werden. Die Wirkstrecken W1a, W1b W2a und W2b sind durch einer oder mehrerer Umlenkeinheiten 11 und das Kraftabtriebsmittel 09 definiert, wobei das rotatorische Kraftabtriebsmittel 09 die Wirkstrecken in einen a/b Teil splittet. Durch eine Verkürzung/Verlängerung der einen Wirkstrecke W1 a & W1b und Verlängerung/Verkürzung der jeweils anderen Wirkstrecken W2a & W2b wird die lineare Verfahrbewegung 06 bereitgestellt. Hierzu ist eine gegenläufige und synchrone, d.h. gleichschnelle Antriebsbewegung der beiden Antriebseinheiten 03 notwendig. Die Anordnung der Antriebseinheiten muss dabei zwischen den Wirkstreckenteilen W1& W2 angeordnet sein, um die lineare Verfahrbarkeit bereitstellen zu können. In Fig. 2b ist dargestellt, wie durch eine gleichgerichtete synchrone Antriebsbewegung der beiden Antriebseinheiten 03 eine rotatorische Kraftabtriebsbewegung 08 des Kraftabtriebsmittels 09 bereitstellen, wobei entlang der Wirkstrecken W1a, W1b, W2a und W2b eine gerichtete umlaufende Bewegung des Kraftübernagungsmittels 10 erfolgt, die das Kraftabtriebsmittel 09 in Rotation versetzt. Somit kann eine wie in Fig. 2 dargestellte Anordnung der beiden Antriebseinheiten an entgegengesetzten Enden der Trägeranordnung sowie eine definierte Positionierung der Umlenkeinheit 11 und des Kraftabtriebsmittels 09 zusammen mit einer gleichsinnigen und gegensinnigen synchronen Antriebsbewegungen der Antriebseinheiten 03 ein lineares Verfahren eines Schlittens und eine rotatorische Abtriebsbewegung ermöglichen. Dabei ist denkbar, dass durch eine aufeinander abgestimmte gleich- oder gegensinnige asynchrone Antriebsbewegung der beiden Antriebseinheiten eine kombinierte lineare und rotatorische Bewegung bereitgestellt werden kann.

Entsprechend dem vorgenannten Antriebsverfahren kann es durchaus vorteilhaft sein, das eine gleich- bzw. gegensinnige synchrone Antriebsbewegung der Antriebseinheiten zumindest einer Antriebseinrichtung eine voneinander unabhängige lineare Verfahrung oder rotatorische Bewegung des zumindest einen Kraftabtriebsmittels bewirkt. Werden die Antriebsbewegungen der beiden Antriebseinheiten exakt synchron aufeinander abgestimmt, so können die lineare Verfahrbarkeit entlang einer Antriebsachsenrichtung und die rotatorische Kraftabtriebsbewegung vollständig isoliert voneinander einzeln bereitgestellt werden, so dass sequenziell hintereinander eine lineare Verfahrung und ein rotatorischer Kraftabtrieb der Antriebseinrichtung innerhalb der Antriebsvorrichtung zur Verfügung gestellt werden kann. Eine abgestimmte Ansteuerung der beiden Antriebseinheiten erleichtert eine einfache Steuerung der Antriebsvorrichtung.

Im Folgenden wird die Erfindung anhand lediglich Ausführungsbeispiele zeigender Zeichnungen näher erläutert.

Es zeigen:
- Fig. 1:: Eine Legendentabelle der in den Figuren verwendeten Piktogramme einzelner Komponenten ;
- Fig. 2:: eine Prinzipskizze der Wirkungsweise eines Ausführungsbeispiels des Antriebsverfahrens einer der Antriebseinrichtungen der erfindungsgemäßen Antriebsvorrichtung;
- Fig. 3:: eine Prinzipskizze eines H-Aufbaus zweier Ausführungsbeispiele einer Antriebseinrichtung der erfindungsgemäßen Antriebsvorrichtung;
- Fig. 4:: eine Prinzipskizze eines H-Aufbaus zweier weiterer Ausführungsbeispiele einer Antriebseinrichtung der erfindungsgemäßen Antriebsvorrichtung;
- Fig. 5:: eine Prinzipskizze eines H-Ausbaus einer Antriebsvorrichtung, die zwei Antriebseinrichtungen des Stands der Technik umfasst;
- Fig. 6.: eine Prinzipskizze eines Z-Aufbaus zweier weiterer Ausführungsbeispiele einer Antriebseinrichtung der erfindungsgemäßen Antriebsvorrichtung;
- Fig. 7:: eine Prinzipskizze eines T-Aufbaus zweier weiterer Ausführungsbeispiels einer Antriebseinrichtung der erfindungsgemäßen Antriebsvorrichtung;
- Fig. 8:: eine Prinzipskizze eines T-Aufbaus eines weiteren Ausführungsbeispiele einer Antriebseinrichtung der erfindungsgemäßen Antriebsvorrichtung;
- Fig. 9:: eine Prinzipskizze eines K-Aufbaus zweier weiterer Ausführungsbeispiele einer Antriebseinrichtung der erfindungsgemäßen Antriebsvorrichtung;
- Fig. 10:: eine Prinzipskizze eines abgesetzten T-Aufbaus zweier weiterer Ausfüh- rungsbeispiele einer Antriebseinrichtung der erfindungsgemäßen Antriebsvorrichtung;
- Fig. 11:: eine Prinzipskizze eines K-Aufbaus mit abgesetzter Traverse eines Beispiels einer nicht erfindungsgemäßen Antriebsvorrichtung;
- Fig. 12:: eine Prinzipskizze eines Doppelschlittenaufbaus mit zwei bzw. drei Bewe- gungsrichtungen zweier weiterer Ausführungsbeispiele von erfindungsgemä- ßen Antriebsvorrichtungen;
- Fig. 13:: Prinzipskizzen diverser Abtriebskonzepte für weitere erfindungsgemäße Ausführungsbeispiele;
- Fig. 14:: eine Prinzipskizze eines K-Aufbaus eines weiteren erfindungsgemäßen Ausführungbeispiels mit verschränkter Rotationsachsenrichtung;
- Fig.15:: eine Prinzipskizze einer Scherenhubantriebsrichtung nach einem weiteren erfindungsgemäßen Ausführungsbeispiel.

Fig. 1 stellt eine Legende der in den nachfolgenden Figuren verwendeten Piktogramme dar, die die einzelnen funktionellen Merkmale einer Antriebseinheitseinrichtung und Antriebsvorrichtung beschreiben. Die Legende erläutert die Piktogramme der bevorzugten und alternativen Anordnungsposition einer Antriebseinheit 03 (Motor) an einer Trägeranordnung 04, einer bevorzugten und alternativen Anordnungsposition einer Umlenkeinheit 11 sowie die Anordnungsposition eines Kraftabtriebsmittels 09 (Abtrieb).

Fig. 2 zeigt in zwei Prinzipskizzen die Wirkungsweise des RL-Prinzips, wie es in einer erfindungsgemäßen Antriebseinrichtung 02 umgesetzt wird. Durch das RL-Prinzip wird eine lineare mit einer rotierenden Bewegung mittels eines einzigen Kraftübertragungsmittels und zweier Antriebseinheiten 03 kombiniert. Die Übertragung der Antriebsbewegungen der beiden Antriebseinheiten 03, die insbesondere rotierende Antriebsmotoren, Linearmotoren, Antriebszylinder oder ähnliches sein können, werden mittels des geschlossenen Kraftübertragungsmittels 10, insbesondere eines Zahnriemens 21, Keilriemens, Antriebskette, Seilzuges oder ähnliches über eine oder mehrere Umlenkeinheiten 11 zu zumindest einem rotatorischen Kraftabtriebsmittel 09 geführt.

In Fig. 2a ist ein gegensinniger Antrieb der beiden rotierenden Antriebseinheiten 03 dargestellt in Richtung der gestrichelten Pfeile 10 dargestellt, sodass die beiden Wirkstrecken W2a und W2b verkürzt und die beiden Antriebswirkstrecken W 1 a und W1b verlängert werden. Demzufolge bewegt sich ein nicht dargestellter Schlitten einer Schlittenanordnung 05 in Antriebsachsachsenrichtung 06 des gestrichelten Pfeils 06 nach oben. Drehen die beiden Antriebseinheiten 03 gegensinnig in Richtung der durchgezogenen Pfeile 10, so erfolgt eine lineare Verfahrbewegung 06 des Schlittens, der Umlenkeinheit 11 und rotatorischen Kraftabtriebsmittel 09 nach unten. Somit kann eine lineare Verfahrbewegung durch gegensinnige Drehung der beiden Antriebseinheiten A1, A2 03 hergestellt werden.

Fig. 2b zeigt in einer weiteren Prinzipskizze die Erzeugung einer rotatorischen Abtriebsbewegung des Kraftabtriebsmittels 09 um eine Rotationsachse. Hierzu drehen die beiden Antriebseinheiten A1, A2 03 synchron in gleichsinninger Richtung, und erzeugen somit eine umlaufende Bewegung des Kraftübertragungsmittels 10 über die Umlenkeinheit 11 und das Kraftabtriebsmittel 09. Hierdurch wird das Kraftabtriebsmittel 09 in eine rotatorische Abtriebsbewegung 08 versetzt. Die Länge der Wirkstrecke W1a, W1b, W2a und W2b bleiben unverändert, da die Kraftübermittelbewegungsrichtung 32 jeweils in die gleiche Richtung entlang des Kraftübertragungsmittels 10 gerichtet ist. Bei synchron gleicher Drehzahl der Antriebseinheiten A1, A2 03 wird keine Verkürzung bzw. Verlängerung der Wirkstrecken W1a, W1b, W2a, W2b bewirkt, so dass eine rotierende Bewegung des Kraftabtriebsmittels 09 erzeugt wird.

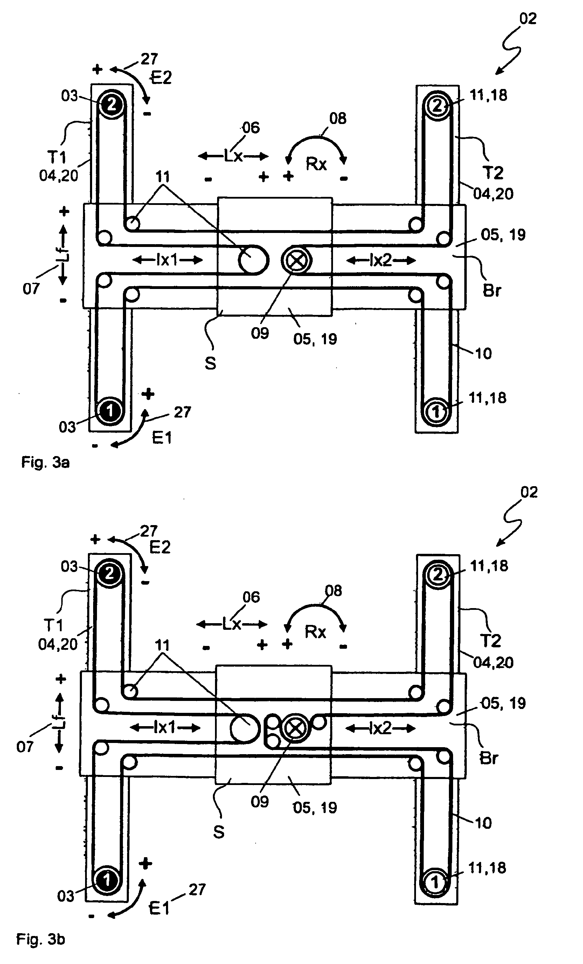

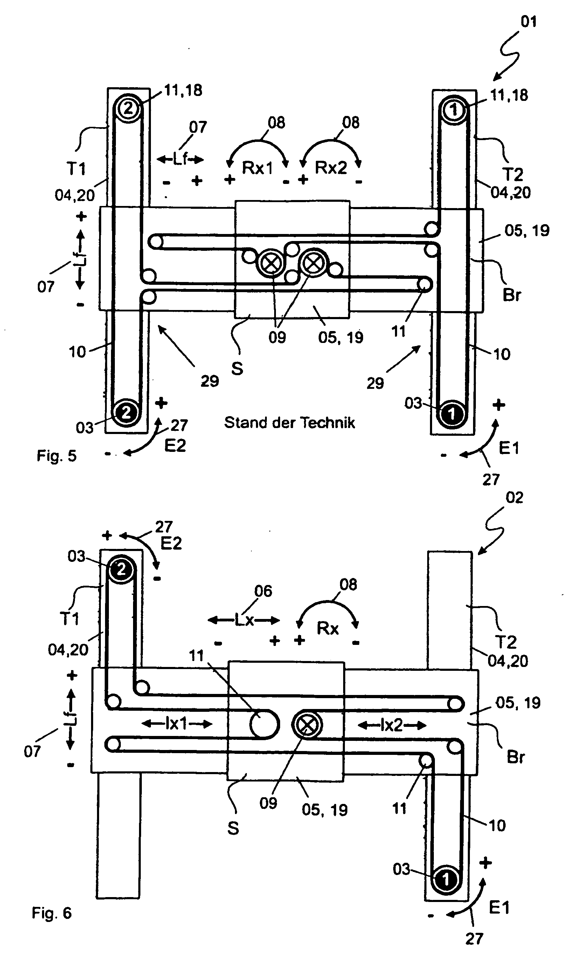

Die nachfolgenden Figs. 3 bis 10 zeigen eine oder mehrere Antriebseinrichtungen, die verschiedene Aufbaukonzepte des erfindungsgemäßen Konzepts darstellen. Dabei betrifft Fig. 5 jedoch eine Antriebsvorrichtung nach dem Stand der Technik.

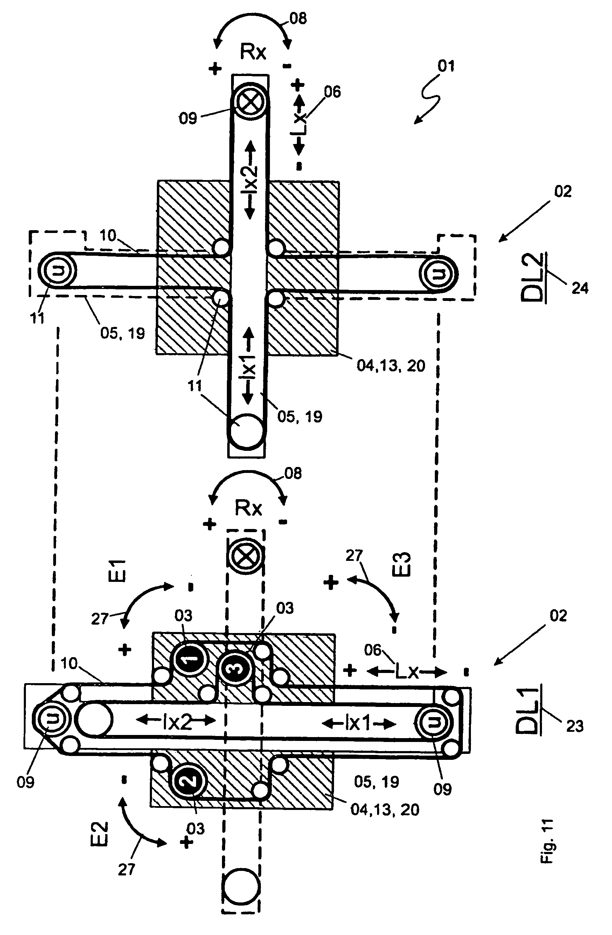

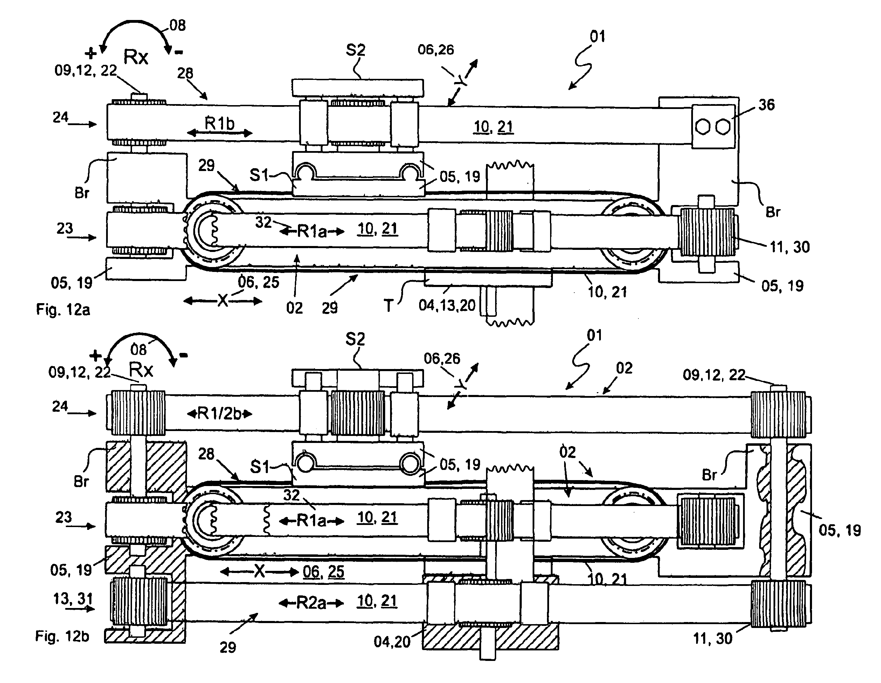

Die Figs. 11 und 12 stellen mögliche Kaskadiermöglichkeiten zweier oder mehrerer Antriebseinrichtungen 02 zu einer Antriebsvorrichtung 01 dar, wobei eine Umsetzung der Antriebsbewegungen 27 der Antriebseinheiten 03 in rotierende Abtriebs- bzw. lineare Verfahrbewegungen dargestellt werden.

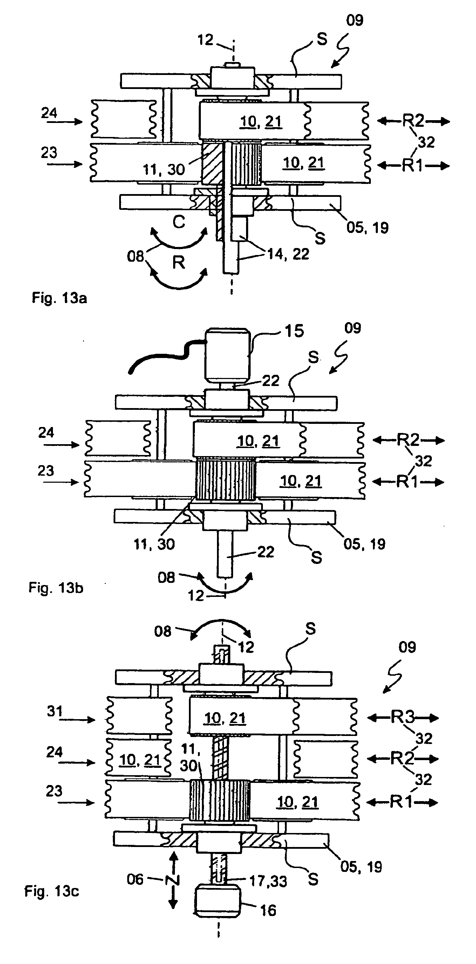

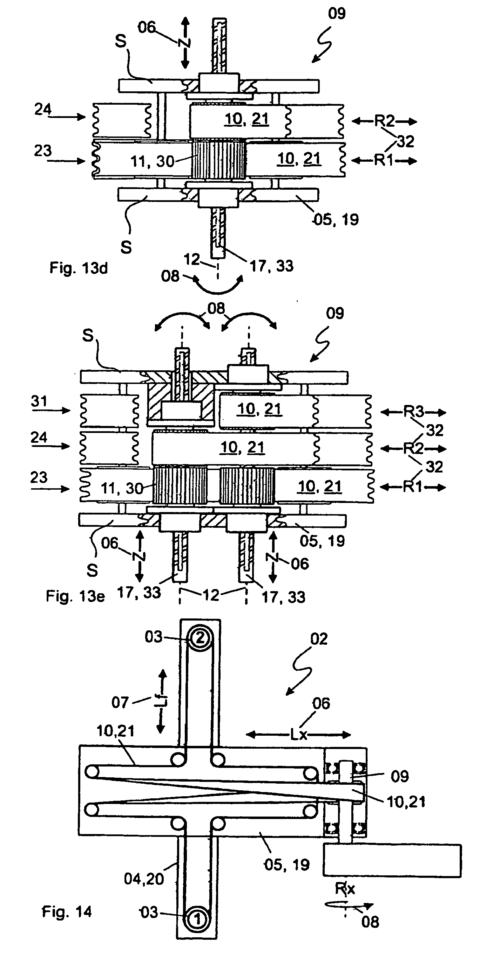

Die weiteren Figs. 13 und 14 zeigen diverse Abtriebskonzepte, um die rotierende Bewegung des Kraftabtriebsmittels 09 vorteilhaft für die Realisierung einer Robotikfunktion auszunutzen.

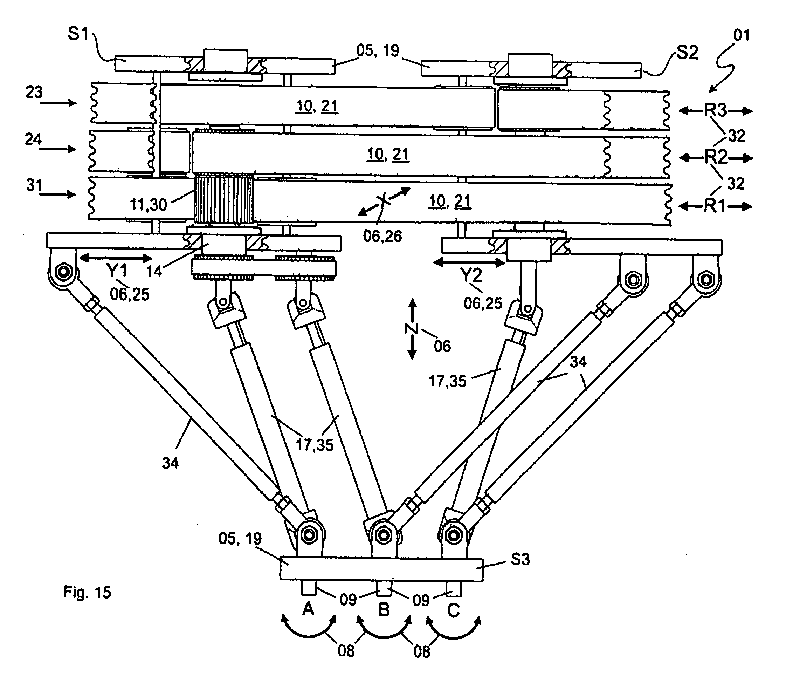

Schließlich zeigt Fig. 15 ein Ausführungsbeispiel einer Antriebsvorrichtung 01 als Scherenhubantriebsvorrichung.

Fig. 3 zeigt schematisch eine H-Anordnung, die zwei feststehende Träger T1, T2 20 einer Trägeranordnung 04 umfasst, auf der eine Brücke als Schlitten 19 verfahrbar gelagert ist und auf dieser Brücke 019 ein zweiter Schlitten 19 orthogonal dazu verfahren werden kann. Eine H-Anordnung eignet sich insbesondere für schwere Lasten, da durch Verwendung zweier Träger zwei Abstützpunkte vorhanden sind und die Antriebseinrichtung 02 platzsparend ausgelegt werden kann.

Fig. 3a stellt dabei ein erstes Ausführungsbeispiel einer H-Anordnung einer Antriebseinrichtung 02 dar. Zwei TrägerT1, T2 20 einer Trägeranordnung 04 sind parallel zueinander im Abstand der Länge einer Brücke BR 19 einer Schlittenanordnung 05 stationär angeordnet. Auf den ersten Träger T1 20 sind an den beiden gegenüberliegenden Längsenden zwei Antriebseinheiten 03 angeordnet, die als drehbare Elektromotoren ausgelegt werden können. Die Brücke BR 19 ist entlang der Längserstreckung der beiden Träger T1, T2 20 in einer Freilaufrichtung LF 07 freilaufend längsverschieblich, wobei auf der Brücke BR 19 ein zweiter Schlitten S 19 in einer Antriebsachsenrichtung Lx 06 entlang der Brücke BR 05, 19 verschieblich gelagert ist. Mittels eines Kraftübertragsmittels 10, dass insbesondere ein Antriebsriemen 21, aber auch eine Antriebskette, Antriebsseilzug o. ä. sein kann, sind die beiden Antriebseinheiten 03 über diverse Umlenkeinheiten 11, die beispielsweise Umlenkrollen 30 sein können, über die Brücke BR 19 und den Schlitten S 19 sowie über zwei weitere Umlenkeinheiten 18, die gleichzeitig Alternativposition der Antriebseinheit 03 darstellen des Trägers T2 20 geführt. Auf dem Schlitten S 19 ist neben einer Umlenkeinheit 11 ein Kraftabtriebsmittel 09 drehbar angeordnet, das bezüglich der Führung des Kraftübertragungsmittels 10 die Funktion einer Umlenkeinheit 11 übernimmt, jedoch zum Kraftabtrieb auf dem Schlitten S 19 dienen kann. Werden die beiden Antriebseinheiten 03 in einer kombinierten Antriebsbewegung E1, E2 27 synchron in gleichsinniger Richtung und gleicher Geschwindigkeit angetrieben, so läuft das Kraftübertragungsmittel 10 um die Umlenkeinheiten 11 herum und treibt das Kraftabtriebsmittel 09 rotatorisch an, so dass sich eine rotatorische Abtriebsbewegung Rx 08 ergibt. Werden hingegen die beiden Antriebseinheiten 03 synchron gegensinnig angesteuert, so bewirken diese eine Verkürzung oder eine Verlängerung der eingezeichneten Antriebsachsenteilstrecken 1x1,1x2 der Antriebsachsenrichtung Lx 06, wodurch der Schlitten S 19 entlang der Brücke BR 19 in Antriebsachsenrichtung Lx 06 verfahren wird. Durch gleichsinnige oder gegensinnige Antriebsbewegung 27 der Antriebseinheiten 03 lassen sich zum einen eine lineare Verfahrbewegung 06 des Schlittens S 19 entlang der Brücke BR 19 erreichen. Durch eine gleichgerichtete Antriebsbewegung 27 der beiden Antriebseinheiten E1, E2 03 lässt sich eine rotatorische Kraftabtriebsbewegung 08 des Kraftabtriebsmittels 09erreichen.

Die verschiedenen Antriebsbewegungsmöglichkeiten E1, E2 27 und deren Auswirkung auf die Verfahrbarkeit und die Abtriebsbewegung des Schlittens S 29 sind in nachfolgender Tabelle dargestellt:

| Antrieb | | Abtrieb | |
|---|---|---|---|
| E1 | E2 | Lx | Rx |
| - | - | 0 | + |
| + | - | - | 0 |
| - | + | + | 0 |
| + | + | 0 | - |
| 0 | - | - | + |
| 0 | + | + | - |
| - | 0 | + | + |
| + | 0 | - | - |
| 0 | 0 | 0 | 0 |

In der oben genannten Antriebstabelle steht das "-" wie in den Figs. 3 und nachfolgend eingezeichnet, für einen rechtsläufige Bewegung, das "+"für einen linksläufige Bewegung und die "0" für Leerlauf. Aus der Antriebstabelle lässt sich somit entnehmen, welche Wirkung ein links- oder rechtsläufiger Antrieb der beiden Antriebseinheiten 03 auf die lineare Verfahrbarkeit Lx entlang der Antriebsachsenrichtung 06 oder den rotatorischen Kraftantrieb 08 des Kraftabtriebsmittels 09 besitzt. Eine solche Antriebstabelle kann für die nachfolgenden Ausführungsbeispiele ebenfalls dargestellt werden, kann jedoch vom Fachmann anhand des vorgenannten Prinzips leicht selbst abgeleitet werden, so dass im Folgenden aus Übersichtlichkeitsgründe darauf verzichtet wird.

Deutlich ist der Tabelle zu entnehmen, dass beim Antrieb nur einer Antriebseinheit 03 (die Zeilen, in denen entweder bei E1 oder bei E2 eine "0" steht) sowohl eine Antriebs-06 als auch eine rotatorische Kraftabtriebsbewegung 06 bewirkt wird. Des Weiteren lassen sich durch asynchrone Bewegungen, in denen beispielsweise ein Antrieb E1 03 schneller als ein Antrieb E2 03 oder umgekehrt läuft, kombinierte Antriebs- und Abtriebsbewegungen 06, 08 erzeugen. Somit kann beispielsweise beim linearen Verfahren in eine Richtung Lx gleichzeitig eine gesteuerter Kraftabtriebsbewegung 08 erzeugt werden. Eine Anordnung von Antriebseinheiten 03 in den vorliegenden Figs. an dargestellten alternativen Antriebspositionen 18 bewirken, dass bei Positionierung einer Antriebseinheit 03 an einer Alternativposition 18 im Grunde nach die selben Antriebsmöglichkeiten hergestellt werden können, jedoch sich in der Regel in der Antriebstabelle die Vorzeichen ändern. Dabei ergibt sich die Möglichkeit, redundante Antriebseinheiten 03 an den Altemativpositionen 18 im Leerlauf anzuordnen, wobei im Fehlerfall einer Antriebseinheit 04 umgeschaltet werden kann, bzw. bei Bedarf durch Zuschaltung der Antriebseinheiten an den Alternativpositionen eine höhere Antriebsleistung bereitgestellt werden kann.

Fig. 3b zeigt entsprechend der Fig. 3a eine weitere Anordnung des H-Aufbaus, bei dem allerdings die Führung des Kraftübertragungsmittels 10 auf den Schlitten 09 mittels weiterer Umlenkeinheiten 11 variiert ist, so dass das Kraftabtriebsmittel 09 entsprechend der oben genannten Antriebstabelle gegenläufig angetrieben wird. Ansonsten ist der Aufbau der Antriebseinrichtung der Fig. 3b mit dem der Fig. 3a im Wesentlichen identisch. Es bleibt zu beachten, dass die Brücke Br 19 entlang einer Freilaufachsenrichtung Lf 07 während des Antriebs 27 der beiden Antriebseinheiten 03 frei verschieblich bleibt, so dass unabhängig von der Bewegung der Antriebseinheiten 03 die Brücke Br 19 an unterschiedlichen Stellen positioniert werden kann. Hierbei bietet es sich beispielsweise an, mittels eines kaskadierten Aufbaus zwei oder weiterer Antriebseinheiten eine Antriebsvorrichtung aufzubauen 01 bei der eine Antriebsverfahrbewegung der Brücke Br 19 in Richtung der Freilaufachsenrichtung Lf 07 bereitgestellt wird, um eine zweidimensionale gesteuerte Verfahrbarkeit des Schlittens S 19 und des damit verbundenen rotatorischen Kraftabtriebsmittels verfügbar zu machen.

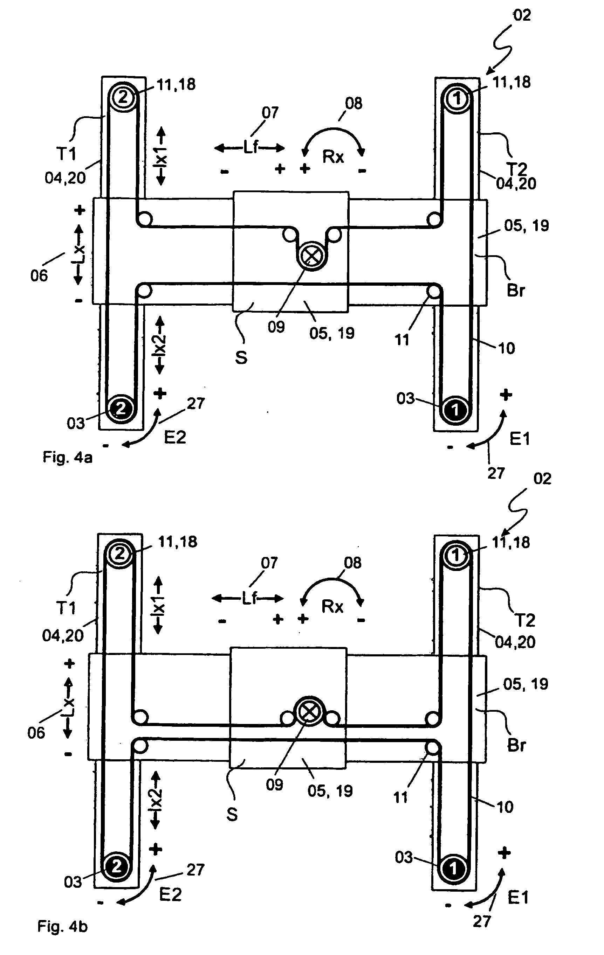

In den Figs. 4a und 4b ist ein weiteres Ausführungsbeispiel einer Antriebseinrichtung 02 dargestellt, dessen Aufbau sich grundsätzlich an dem in Fig. 3 dargestellten Ausführungsbeispiel orientiert. Eines der beiden Antriebseinheiten 03 ist dabei auf einer Alternativposition der Fig. 3a am entsprechenden Ende des Trägers T2 20 gesetzt, und die Führung des Kraftübertragungsmittels 10 auf den Schlitten S 19 wurde entsprechend angepasst. Somit ergibt sich in der Fig. 4a eine Antriebseinrichtung 02, bei der der Schlitten Br 19 entlang einer Antriebsachsenrichtung Lx 06 verfahrbar ist, die gegenüber der Fig. 3a eine Freilaufachsenrichtung 07 darstellte. Entsprechend verfügt der Schlitten S 19 über eine Freilaufachsenrichtung Lf 07 entlang der Brücke Br 19, die zuvor die Antriebsachsenrichtung 06 der Fig. 3 war.

In Fig. 4b ist entsprechend der Fig. 4a ein Ausführungsbeispiel 02 dargelegt, bei dem die Führung des Kraftübertragungsmittels 10 auf den Schlitten S 19 zur Bewegung des rotatorischen Kraftabtriebsmittels 09 dergestalt verändert wurde, dass sich eine gegenläufige Abtriebsbewegung 08 des Kraftabtriebsmittels 09 gegenüber dem in Fig. 4a dargestellten Ausführungsbeispiels ergibt. Somit lässt sich beispielsweise durch Kombination der Ausführungsbeispiele der Figs. 3 und 4 dargestellten Antriebseinrichtungen eine X-, Y-Verfahrbarkeit sowie ein Antrieb zweier rotatorischer Kraftabtriebsmittel 09 auf dem Schlitten S 19 bereitstellen, so dass beispielsweise ein Flächenpositionierungsroboter mittels zweier kaskadierter Antriebseinrichtungen 02 geschaffen werden kann, der eine X-Y-Verfahrbarkeit 06 und zwei rotatorische Kraftabtriebsbewegungen 08, beispielsweise eine Hub-Senk- und eine Drehbewegung zum flächenhaften Setzen von Bohrlöchern ausführen kann.

In der Fig. 5 ist in einer Antriebsvorrichtung 01 eine Kombination zweier Antriebseinrichtungen 29 mit jeweils einer einzigen Antriebseinheit, die über ein Kraftübertragungsmittel 10 jeweils eine rotatorische Kraftabtriebsbewegung 08 auf ein Kraftabtriebsmittel 09 einer Schlittenanordnung 05 überträgt. Die Antriebseinrichtungen 29 entsprechen in ihrem grundsätzlichen Aufbau dem H-Aufbau, wie er bereits in den Figs. 3 und 4 dargestellt ist. Die jeweilige Antriebseinheiten 03 der Antriebseinrichtungen 29 sind an jeweils einem unteren Ende eines stationären Trägers T1, T2 20 angeordnet und übertragen über ein Kraftübertragungsmittel 10 ihre Antriebsbewegung 27 auf jeweils ein auf dem Schlitten S 19, der entlang eines zweiten Schlittens BR 9 längsverschieblich gelagert ist, angeordneten rotatorischen Kraftabtriebsmittel 09. Sowohl der Schlittens S 19 verfügt über eine Freilaufachsenrichung Lf 07 entlang der Brücke BR 19, und die Brücke BR 19 verfügt über eine Freilaufachsenrichtung Lf 07 entlang der Längserstreckung der beiden Träger T1, T2 20. Somit lässt sich eine Antriebsebene mit zwei Antriebseinrichtungen 29 vorteilhaft mit einem oder beiden Ausführungsbeispielen der Figs. 3 oder 4 kombinieren, um weitere Kraftabtriebsbewegungen, beispielsweise zum Betrieb eines Greifermechanismus, eines Werkzeugs o. ä. bereitstellen.

Fig. 6 zeigt eine Z-Anordnung einer Antriebseinrichtung 02 als weiteres Ausführungsbeispiel, die entsprechend den vorher dargestellten H-Anordnungen zwei stationäre Träger T1, T2 20 umfasst, wobei die beiden Antriebseinheiten 03 an den beiden gegenüberliegenden Enden der jeweiligen Träger T1, T2 20 angeordnet sind. Die Brücke BR 19 kann frei verschieblich entlang der Träger T1, T2 20 auf einer Freilaufachsenrichtung Lf 07 verschieblich verfahren werden. Der Schlitten S 19 kann entlang der verschieblichen Brücke Br 19 in Antriebsachsenrichtung 06 Lx verfahren werden. Mittels einer gleichläufigen Bewegung der beiden Antriebseinheiten 03 kann das rotatorische Abtriebsmittel 09 auf dem Schlitten S 19 angetrieben werden. Somit entspricht das Ausführungsbeispiel der Fig. 6 in seiner Funktion den bereits in den Figs. 03 dargestellten Ausführungsbeispielen, allerdings ist eine Antriebseinheit 03 auf eine Alternativposition 18 gesetzt worden..

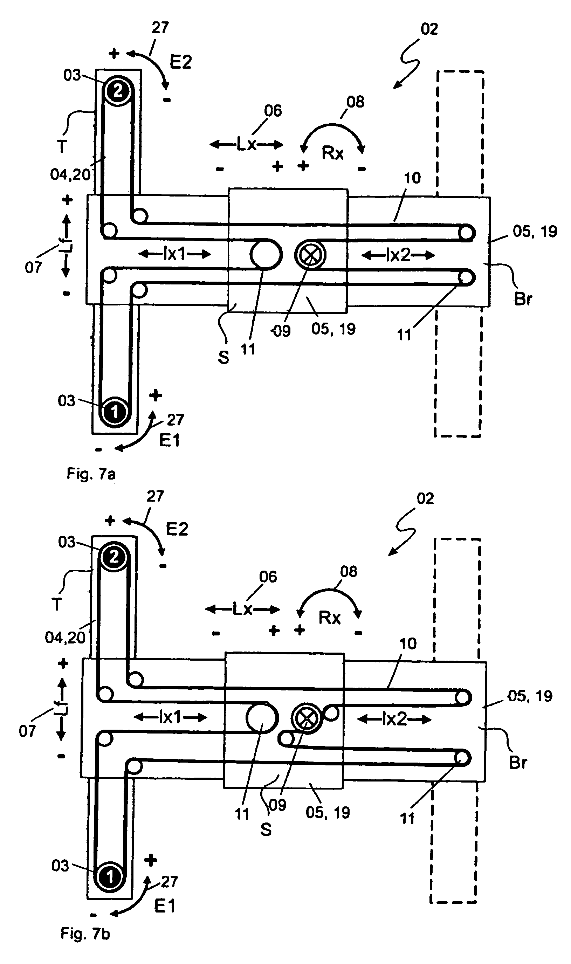

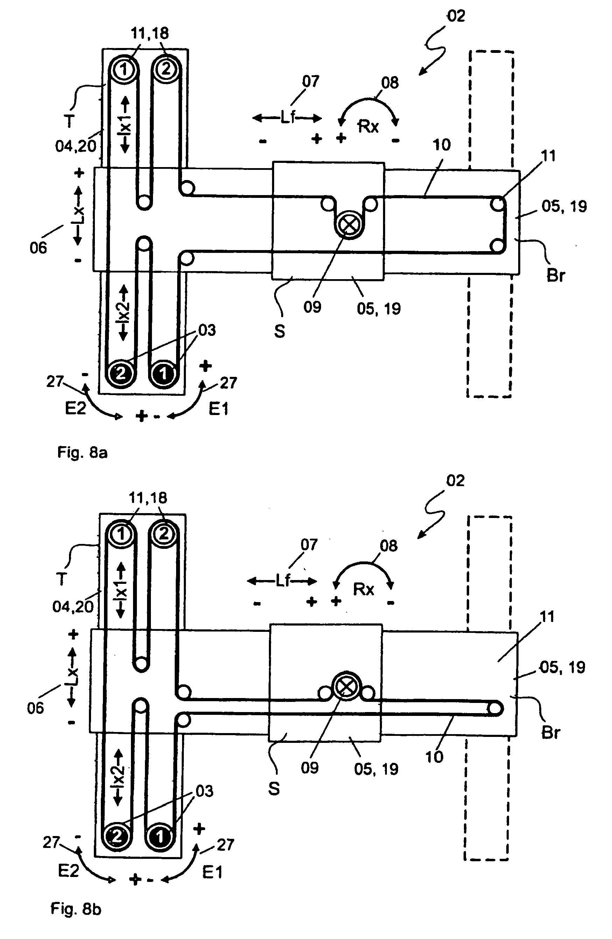

Die Figs. 7 und 8 zeigen Ausführungsbeispiele einer Antriebseinrichtung 02, die auf einem T-Aufbau beruhen. Hierzu umfasst die Antriebseinrichtung 02 nach Fig. 7 einen stationären Träger T 20, an dem an den jeweiligen Längsenden Antriebseinheiten 03 angeordnet sind. Auf dem Träger 20 stützt sich einseitig ein verfahrbarer Schlitten als Brücke BR 19 ab. Entlang der Brücke 19 kann ein Schlitten S 19 in einer Antriebsachsenrichtung Lx 06 verfahren werden. Auf dem Schlitten S 19 befindet sich neben einer Umlenkeinheit 11 ein Kraftabtriebsmittel 09, dass eine rotatorische Kraftabtriebsbewegung 08 erzeugen kann. Durch kombinierte Bewegung der beiden Antriebseinheiten 03 lässt sich der Schlitten S 19 entlang der Brücke BR 19 verfahren und im Falle einer gleichläufigen Antriebsbewegung E1, E2 27 der Antriebseinheiten 03 einer Rotation des Kraftabtriebsmittels 09 bereitstellen. Die Brücke BR 19 lässt sich entlang einer Freilaufachsenrichtung Lf 07 entlang des Trägers T 20 frei verschieblich verfahren.

Die Fig. 7b unterscheidet sich von der Fig. 7a durch eine geänderte Ankopplung des Kraftübertragungsmittels 10 zum Kraftübertragungsmittel 09, sodass eine gegenläufige Kraftabtriebsbewegung 08 bereitgestellt werden kann. Grundsätzlich kann bei der T-Anordnung ein zweiter feststehender Träger, der schraffiert eingezeichnet ist, vorgesehen werden. Durch das T-Prinzip kann die Länge des Kraftübertragungsmittels 10 erheblich verkürzt werden, da auf einen zweiten Träger 20 mit entsprechenden Umlenkeinheiten 11 verzichtet werden kann.

In der Fig. 8 ist das T-Prinzip der Fig. 7 variiert, indem der Träger T 20 breiter ausgelegt und die beiden Antriebseinheiten 03 nicht an zwei gegenüberliegenden Seiten des Trägers T 20, sondern an der gleichen Seite nebeneinander auf den Träger T 20 angeordnet sind. Ansonsten entspricht der Aufbau der Antriebseinrichtung 02 der Fig. 8 dem in der Fig. 7 dargestellten Ausführungsbeispiel. In der Fig. 8b ist gegenüber der Fig. 8a die Drehrichtung des Kraftabtriebsmittels 09 geändert, so dass statt einer gegensinnigen eine gleichsinnige Kraftabtriebsbewegung 08 bezüglich der Antriebsbewegungen 27 der Antriebseinheiten 03 erzeugt werden kann.

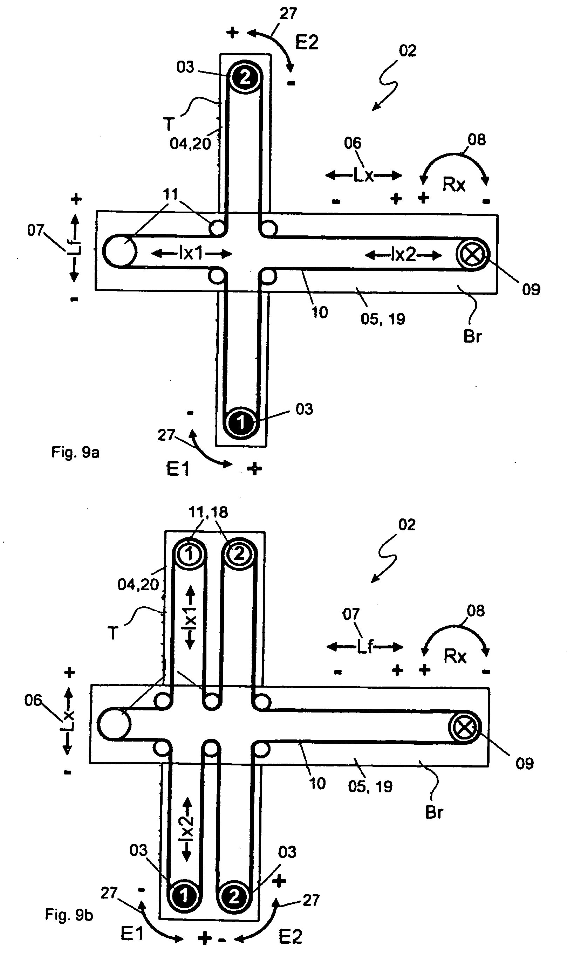

Die Fig. 9 stellt einen K-Aufbau (K = Kreuz) eines weiteren Ausführungsbeispiels einer Antriebseinrichtung 02 dar, die eine einzelne Brücke BR 19 als Schlittenanordnung 05 umfasst. Diese Schlittenanordnung 05 ist als Kreuzschlitten 20 ausgestaltet, die zum einen parallel, zum anderen rechtwinklig zum stationären Träger T 20 verfahrbar ist. An den beiden Längsenden des Trägers T 20 sind zwei Antriebseinheiten 03 angeordnet. Mittels eines gleichläufigen Betriebs der beiden Antriebseinheiten 03 wird das Kraftabtriebsmittel 09 in eine rotatorische Kraftabtriebsbewegung 08 versetzt. Durch gegenläufige Antriebsbewegungen 27 der Antriebseinheiten 03 wird der Kreuzschlitten 19 BR entlang der Antriebsachsenrichtung Lx 06 verfahren. Die Brücke BR 19 kann entlang des stationären Trägers T 20 in einer Freilaufachsenrichtung 07 verschoben werden.

Demgegenüber zeigt die Fig. 9b einen entsprechenden Aufbau zur Fig. 9a, jedoch ist der stationäre Träger T 04, 20 breiter ausgelegt, das Kraftübertragungsmittel 10 zwischen Kreuzschlitten BR 19 und Träger 20 mittels einer weiteren Umlenkeinheit 11 in einer zusätzlichen Schlaufe verlegt und die beiden Antriebseinheiten 03 auf der gleichen Längsseite des Trägers 20 angeordnet. Somit können die beiden Antriebseinheiten 03 an der gleichen Seite des Trägers 20 angeordnet werden und die Antriebsachsenrichtung Lx 06 erstreckt sich entlang des Trägers T 20, wobei eine Freilaufachsenrichtung Lf 07 rechtwinklig zum Träger 20 ausgebildet wird. Durch Kombination der Antriebseinrichtungen 02 der Fig. 9a und 9b kann eine kreuzschlittenartige Anordnung geschaffen werden, die sowohl in X- wie auch in Y-Richtung verfahrbar ist und zwei rotatorische Kraftabtriebsbewegungen 08 bereitstellen kann.

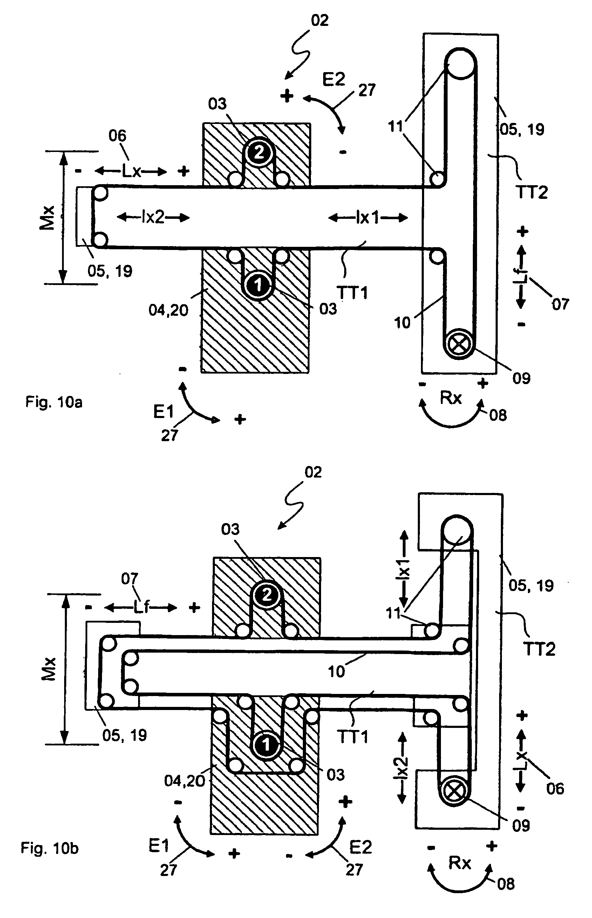

Die in der Fig. 10 dargestellten Ausführungsbeispiele einer Antriebseinrichtung 02 beruhen auf einer gegeneinander verfahrbaren Schlittenanordnung 05, bei der ein erster Schlitten TT1 19 gegenüber einem feststehenden Träger 20 verfahrbar ist, und aufbauend auf diesem Schlitten TT1 19 ein weiterer Schlitten TT2 19 in orthogonaler Richtung zum ersten Schlitten TT1 19 verfahren werden kann. Somit ergibt sich eine Freilaufachsenrichtung Lf 07 des Schlittens TT2 19 gegenüber dem ersten Schlitten TT1 19 und einer Antriebsachsenrichtung Lx 06 des Schlittens TT1 19 gegenüber der feststehenden Trägeranordnung 04. Die beiden Antriebseinheiten 03 sind auf der Trägeranordnung 04 angeordnet und übertragen über ein Kraftübertragungsmittel 10, das über Teile der Schlittenanordnung TT1 und TT2 05 geführt wird, eine rotatorische Kraftabtriebsbewegung 08 an das Kraftabtriebsmittel 09 des Schlittens TT2 19. Die gesamte Schlittenanordnung 05 lässt sich rechtwinklig zur Erstreckung der Trägeranordnung 20 verfahren, wobei ein Freilauf des zweiten Schlittens TT2 19 gegenüber dem ersten Schlitten TT1 ermöglicht wird.

In Fig. 10b wird durch eine Doppelschlaufe des Kraftübertragungsmittels 10 eine Umkehrung der Freilaufachsenrichtung Lf 07 und der Antriebsachsenrichtung Lx 06 erreicht, so dass mittels der beiden Antriebseinheiten 03 eine Verfahrbarkeit des Schlittens TT2 19 gegenüber dem Schlitten TT1 19 in einer Antriebsachsenrichtung 06 bereitgestellt wird. Die gesamte Schlittenanordnung TT1, TT2 05 kann gegenüber der feststehenden Trägeranordnung 04 freilaufend entlang der Freilaufachsenrichtung Lf 07 verschoben werden. Die T-Anordnung mit abgesetzter Traverse zeichnet sich dadurch aus, dass Maschinenteile oder Werkstücke leicht umfahren werden können, da diese Antriebseinrichtung 02 aufgrund ihrer X-Y-Verfahrbarkeit und ihrer kompakten Trägeranordnung 04 große Freiräume bietet. Dies wird durch ein Absetzen des zweiten linearen Antriebsanteiles auf dem zweiten Schlitten TT2 19 gegenüber dem ersten Schlitten TT1 19 erreicht. Dadurch beeinflusst der Abstand und Position der beiden Antriebseinheiten 03 auf dem Träger 20 die Bewegung des Schlittens TT2 19 nicht.

In Fig. 11 ist ein erstes Ausführungsbeispiel einer Antriebvorrichtung 01 dargestellt, die zwei Antriebseinrichtungen 02, 29 umfasst. Die erste Antriebseinrichtung 02 der Antriebsvorrichtung 01 ist in einer ersten Antriebsebene DL1 23 angeordnet und umfasst auf einem feststehenden Trägeranordnung 04 zwei Antriebseinheiten 1 und 2 03, die über ein Kraftübertragungsmittel 10 zum einen eine lineare Verfahrbarkeit Lx gegenüber einer Antriebsachsenrichtung 06 ermöglicht, zum anderen ein Kraftabtriebsmittel U 09 antreibt. Eine zweite Antriebseinrichtung 29 innerhalb der ersten Antriebsebene DL1 23 umfasst eine Antriebseinheit 3 03, die ein zweites Kraftübertragungsmittel 10 antreibt, und damit ein zweites Kraftübertragungsmittel U 09 in Rotation versetzt. Aufbauend auf der ersten Antriebsebene DL1 23 wird auf einer zweiten Antriebsebene DL2 24 die beiden rotatorischen Kraftabtriebsbewegungen 08 der beiden Kraftabtriebsmittel U 09 zum kombinierten Antrieb einer weiteren Antriebseinrichtung 02 der zweiten Antriebsebene 24 verwendet. Die beiden Kraftabtriebsmittel U 09 in der ersten Antriebsebene DL1 23 stellen dabei zwei Antriebseinheiten 03 für die Antriebseinrichtung 02 der zweiten Antriebsebene 24 bereit und treiben ein Kraftübertragungsmittel 10 analog einer K-Ausführung nach Fig. 9a an, um einen zweiten Schlitten 19 der zweiten Antriebsebene 24 in einer zweiten Antriebsachsenrichtung Lx 06 verfahren zu können. Hierbei kann auf dem zweiten Schlitten 19 eine weitere Kraftabtriebsbewegung 08 des Kraftabtriebsmittels 09 bereitgestellt werden.

Somit lassen sich mittels dieses Beispiels auf der Trägerebene 13, der ersten und zweiten Antriebsebene 23, 24 mittels einer Antriebseinrichtung 29, die lediglich eine einzige Antriebseinheit 03 umfasst, und einer zweiten erfindungsgemäßen Antriebseinrichtung 02, wobei auf der zweiten Antriebsebene DL2 24 aufgrund der rotatorischen Abtriebsbewegungen 09 der ersten und zweiten Antriebseinrichtungen 29, 20 ein weiteres Ausführungsbeispiel einer Antriebseinrichtung 02 realisiert ist, sowohl eine lineare X-, als auch Y-Verfahrbarkeit und eine rotatorischen Kraftabtriebsbewegung 08 der Antriebsvorrichtung bereitstellen, bei der alle Antriebseinheiten stationär auf dem Träger 13 angeordnet sind. Im Resultat kann mittels dreier Antriebseinheiten ein XY-Robotersystem mit rotatorischer Kraftabtriebsbewegung 08 bereitgestellt werden, bei dem alle Antriebseinheiten auf der stationären Trägeranordnung 04 angeordnet sind. Dabei ist der Motorenabstand nicht von der Bewegung der Schlittenanordnung 05abhängig. Es wird erreicht, dass über Abtriebe U 09 der ersten Antriebsebene 23 die zweite Antriebsebene 24 gemäß des erfinderischen Konzepts angetrieben werden kann, wobei die lineare und rotierende Bewegung des zweiten Schlittens 19 vom ersten Schlitten 1 als rotierende Bewegungen 08 übergeben und mittels des erfinderischen RL-Prinzips umgesetzt werden kann. Der Aufbau ist in der ersten Antriebsebene DL1 23 dem K-Aufbau der Fig. 9 ähnlich und entspricht ebenfalls in der zweiten Antriebsebene DL2 24 einem K-ähnlichem Aufbau t

Die Fig. 12 betrifft eine erfindungsgemäße Antriebsvorrichtung 01 mit einem Doppelschlittenaufbau, wobei in Fig. 12a zwei Antriebsebenen und in Fig. 12b drei Antriebsebenen zum linearen Verfahrbetrieb 25, 26 und zur Erzeugung einer rotatorischen Abtriebsbewegung 08 auf dem Doppelschlitten Br/S1, S2 19 dargestellt sind. In Fig. 12a befindet sich unterhalb einer ersten Antriebsebene 23 eine starre Trägeranordnung T 04 einer Trägerebene 13. Die Schlittenanordnung 05 umfasst die Schlitten S1, S2 und die Brücke BR 19, wobei gegenüber dem Träger 20 zunächst die Brücke Br 19, und wiederum gegenüber der Brücke Br 19 der Doppelschlitten S1, S2 19 verfahrbar sind. In der ersten Antriebsebene 23 sind sandwichartig ineinander gebettet zwei Antriebseinrichtungen 02, 29 angeordnet, wobei die erste Antriebseinrichtung 02 ein RL-Prinzip umsetzt, und somit zum einen eine lineare Verfahrbarkeit R1a 32 der Brücke Br 19 gegenüber dem Träger T 20 entlang einer ersten Antriebsachsenrichtung X 25 ermöglicht, und zum anderen mittels einer Kraftabtriebswelle 09 eine rotatorische Kraftabtriebsbewegung 08 auf eine zweite Antriebsebene 24 zum Antrieb einer weiteren Antriebsvorrichtung 28 zur Y-Verfahrbarkeit 26 des auf dem Schlitten S1 19 reitenden zweiten Schlitten S2 19 ermöglicht. Hierbei ist die Antriebseinrichtung 28 der zweiten Antriebsebene 24 mittels eines festgelegten Antriebsriemens 21 an einer Festlegung 36 der Brücke Br 19 zur Ermöglichung der Y-Verfahrbarkeit 26 vorgesehen. In der ersten Antriebsebene 23 reitet des Weiteren der Schlitten S 19 mittels einer zweiten Antriebseinrichtung 29, die nur eine L-Verfahrbarkeit bietet, ebenfalls in die erste Antriebsachsenrichtung 25, wodurch sich eine doppelte Verfahrbarkeit des Schlittens S1 19 zum einen zusammen mit der Brücke Br 19, zum anderen relativ gegenüber der Brücke Br 19 in X-Richtung 25 ergibt. Die Bewegungskräfte werden über Antriebsriemen 21 übertragen, wobei auf der ersten Antriebsebene 23 mittels nicht dargestellter Antriebseinheiten 03, die auf dem Träger 20 angeordnet sind, die beiden Riemen 19 der Antriebseinrichtung 02 und der Antriebseinrichtung 29 angetrieben werden. Der Antriebsriemen 21 der zweiten Antriebseinrichtung 29 ist 90° gegenüber der Ausrichtung des Antriebsriemens 21 der ersten Antriebseinrichtung 02 versetzt und dient zum Antrieb des Schlittens S1 19 relativ zur Brücke Br 19. In der zweiten Antriebsebene 24 bewirkt ein Antrieb des Riemens R1b 21 in Kraftübettragungsmittelbewegungsrichtung R1b 32 durch die Festlegung 36 eine lineare Verschiebung des Schlittens S2 19 gegenüber dem Schlitten S1 19 in die zweite Antriebsachsenrichtung Y 26.

Fig. 12b erweitert das in Fig. 12a dargestellte Konzept um eine weitere Antriebsebene 31, die innerhalb der Trägerebene 13 angeordnet ist, und in der sich eine weitere Antriebseinheit 29 zur Erzeugung einer rotatorische Antriebsbewegung 08 zur Bereitstellung einer rotatorischen Antriebsfunktion 08 auf der zweiten Antriebsebene 24 mittels der rechten Kraftabtriebswelle 22 befindet. Die doppelte Verfahrbarkeit in X-Richtung 25 der Doppelschlitten Br, S1 19 wird mittels der Riemenbewegungen 32 der ersten und zweiten Antriebseinrichtungen 02, 29 der ersten Antriebsebene 23 bereitgestellt. In der zweiten Antriebsebene 24 ist im Gegensatz zur Antriebsvorrichtung der Fig. 12a eine RL-Antriebseinrichtung 02 vorgesehen, wobei eine erste Antriebskomponente R1b 32 mittels der rotatorischen Kraftabtriebsbewegung 08 der ersten Antriebseinrichtung 02 der ersten Antriebsebene 23 erzeugt wird, die über die linke Antriebswelle 22 der Brücke Br 19 in die zweite Antriebsebene 24 übertragen wird. Des weiteren wird die zweite rotatorische Antriebskomponente R2b 32 der Antriebseinrichtung 02 der zweiten Antriebsebene 24 über die Antriebseinheit 29 der weiteren Antriebsebene 32 in Höhe der Trägerebene 13 als Antriebsriemenbewegung R2a erzeugt, und über die rechte Antriebswelle 22 auf die zweite Antriebsebene 24 als Antriebsriemenbewegung R2b 32 übertragen. Somit kann in der zweiten Antriebsebene 24 mittels der beiden Bewegungskomponenten Rlb/R2b 32 ein RL-Prinzip der Antriebseinrichtung 02 der zweiten Antriebsebene 24 zur Erzeugung einer linearen Verfahrbarkeit des Schlittens S2 19 in Y-Richtung 26 sowie zur Bereitstellung einer rotatorische Kraftabtriebsbewegung am Schlitten S2 19 realisiert werden. Durch die Doppelschlittenausführung Br, S 1 bezüglich der ersten Antriebsachsenrichtung X 25 wird ein größerer Bewegungsweg geschaffen, wobei nur geringe Massen bewegt werden müssen. Alle nicht dargestellten Antriebseinheiten 03 befinden sich auf der feststehenden Trägeranordnung 04. Diese Auslegung beruht grundsätzlich auf dem bereits in Fig. 11 dargelegten K-Aufbau mit abgesetzter Traverse, wobei auf dem Schlitten S1 19der Schlitten S2 19 reitet. Durch die Gegenläufigkeit der Schlitten Br, S1 19, die durch die Kraftübertragungsmittelbewegungsrichtung R1a ausgelöst wird, wird der einseitige Schlittenweg der Brücke Br 19 verdoppelt. In der in Fig. 12b dargestellten Ausführungsform einer Antriebsvorrichtung 01 werden zwei Linearbewegungen 25, 26 in X und Y Richtung realisiert wobei die X-Antriebsachsenrichtung 25 verdoppelt ist. Der rotierende Anteil 08 der Antriebseinrichtung 29 der Trägerebene 13/weiteren Antriebsebene 31 wird zusammen mit dem rotierenden Anteil 08 der Antriebseinrichtung 02 der ersten Antriebsebene 23 mittels Antriebswellen 22 auf die zweite Antriebsebene 24 geleitet und dort in eine lineare Bewegungsrichtung Y 26 sowie eine rotatorische Abtriebsbewegung 08 auf dem Schlitten S2 19 transformiert.

Die Figs. 13 stellen verschiedene Abtriebskonzepte der rotatorischen Kraftabtriebsbewegung 08 auf einer Schlittenanordnung 05 dar. Diesen Abtriebskonzepten ist gemeinsam, dass zumindest zwei oder drei Antriebseinrichtungen 02, 28, 29 auf zwei oder mehreren Antriebsebenen 23, 24, 31 mit zwei oder drei Kraftübertragungsmitteln 10 an einer gemeinsamen oder an zwei getrennten Rotationsachsen 12 angreifen, um eine oder mehrere rotatorische Kraftabtriebsbewegung 08 zur Verfügung zu stellen. Natürlich ist auch denkbar, dass mehrere Antriebseinrichtungen 02, 28, 29 innerhalb einer Antriebsebene zusammengefasst werden können.

So zeigt Fig. 13a ein Kraftabtriebsmittel 09, das eine Hohlwellenanordnung 14, umfassend eine Außenhohlwelle und einer Innenwelle aufweist, die mittels zweier Kraftübertragungsmittel 10 in Form von Antriebsriemen 21 durch Umlenkeinheiten 11 in Form von Umlenkrollen 30 angetrieben werden. Die beiden Kraftübertragungsmittel 10 der beiden nicht dargestellten Antriebseinrichtungen sind in einer ersten und einer zweiten Antriebsebene 23, 24 angeordnet und werden in Kraftübermittelbewegungsrichtungen R1, R2 32 bewegt. Hierbei treibt das Kraftübertragungsmittel 10 der ersten Antriebsebene 23 die äußere Hohlwelle an und erzeugt eine rotatorische Kraftabtriebsbewegung C 08, und das Kraftübertragungsmittel 10 der zweiten Antriebsebene 24 treibt die innere Welle an und erzeugt die rotatorische Kraftabtriebsbewegung R 08. Die beiden entlang einer einzigen Rotationsachse 12 erzeugten rotatorischen Kraftabtriebsbewegungen 08 können beispielsweise zur Manipulation einer Greifbewegung verwendet werden. Durch Nutzung eines gemeinsam Wurzelpunktes der rotatorischen Abtriebsbewegungen 08 kann ein Greifer oder ein Werkzeug bedient werden, wobei die R1-Bewegung 32 die C-Bewegung 08 und die R2-Bewegung 32, die R-Bewegung 08 zur Betätigung einer Werkzeugfunktion z. B. Öffnen oder Schließen eines nicht dargestellten Greifers verwendet werden kann. Dies kann zur Anwendung für Manipulatoren dienen, bei denen die Greifbewegung in die Interpolierung aufgenommen wird und somit ein Warten auf Entlagenauswertungen hinfällig ist.

Fig. 13b stellt vergleichbar zur Fig. 13a ein Kraftabtriebsmittel 09 dar, das entweder mittels einer Hohlwellenanordnung 14 oder zweier sich gegenüberliegender, entlang einer gemeinsamen Rotationsachse 12 angeordneter Antriebswellen 22 sowohl ein Aggregatmittel 15 antreibt, als auch eine rotatorische Kraftabtriebsbewegung 08 an einem entgegengesetzten Ende der Rotationsachse 12 bereitstellt. Auch hier erfolgt die Erzeugung der beiden rotatorischen Kraftabtriebsbewegungen 08 entlang der gemeinsamen Rotationsachse 12 mittels zweier Antriebseinrichtungen, die über zwei Kraftübertragungsmittel 10 in Form von Antriebsriemen 21 die beiden Kraftübertragungsmittelbewegungsrichtungen R 1, R2 32 in rotatorische Bewegungen 08 zum Antrieb des Kraftabtriebsmittels 09 umsetzen. Das Aggregatmittel 15 kann ein Stromgenerator, eine Druckluftpumpe, eine Vakuumerzeugungspumpe o. ä. umfassen, um Hilfsenergie auf dem bewegten Schlitten 19 bereitzustellen, insbesondere um Werkzeugfunktionen auf dem bewegten Schlitten bereitzustellen oder zu unterstützen.

In der Fig. 13c ist eine weitere Ausführungsform eines Kraftabtriebsmittels 09 dargestellt, das über drei Antriebseinrichtungen verfügt, die auf einer ersten Antriebsebene 23, einer zweiten Antriebsebene 24 und einer weiteren Antriebsebene 31 angeordnet sind. Hierzu wird entlang einer Rotationsachse 12 eine Dreh-Hubeinrichtung 17 in Form einer Drehhubspindel 33 mittels zweier Kraftübertragungsriemen 10, 21 der ersten Antriebsebene 23 und der weiteren Antriebsebene 31 angetrieben. Die Antriebseinrichtung der zweiten Antriebsebene dient zur linearen Verfahrbarkeit des Schlitten S 19. Mittels der Kraftübermittelbewegungsrichtung R1 und R3 32 kann die Drehhubspindel 33 zum einen eine rotatorische Kraftabtriebsbewegung 08 ausüben und zum anderen in eine Z-Antriebsachsenrichtung 06 verfahren werden. Somit kann eine angeschlossene Werkzeugeinrichtung 16, beispielsweise ein Bohrfutter sowohl linear in eine Z-Achsenrichtung 06 bewegt, als auch in Rotation 08 versetzt werden und kann als positionierbare Bohreinrichtung zum definierten Setzen von Löchern beispielsweise in Metall- oder Holzplatten eingesetzt werden. Mit Hilfe des in Fig. 13c dargestellten Ausführungsbeispiels eines Kraftabtriebsmittels 09 sind endlose Werkzeugbewegungen möglich, bei dem die rotierende Bewegung 08 der Werkzeugeinrichtung 16 nicht von deren Z-Linearbewegung 06 abhängig ist, wobei auf eine Positionsauswertung verzichtet werden kann. Dabei sind Bearbeitungsvorgänge wie Bohren, Schleifen, Polieren o. ä. lineare oder rotierende Arbeitsbewegungen bereitstellbar.

In der Fig. 13d ist eine weitere Ausführungsvariante eines Kraftabtriebsmittels 09 dargestellt, mit deren Hilfe eine Drehhubbewegung 06, 08 ausgeführt werden kann. Hierzu sind wiederum auf zwei Antriebsebenen 23, 24 zwei Antriebseinrichtungen angeordnet, die eine Drehhubspindel 33 sowohl in eine Drehung 08 als auch in eine lineare Z-Richtung 06 verfahren kann. Das Konzept des in Fig. 13d dargestellten Kraftabtriebsmittels entspricht dabei dem in Fig. 13c dargestellten Konzept einer endlosen Werkzeugbewegung. Mittels einer Drehhubspindel 33 können zwei Bewegungsrichtungen R1, R2 32 der Kraftübertragungsmittel 10 in eine 90° versetzte Z-Linearbewegung 06 und eine rotatorische Kraftabtriebsbewegung 08 umgesetzt werden. Dies ermöglicht die Bereitstellung einer Z-Bewegung 06 und eine dazugehörige C-Bewegung 08.

Fig. 13e stellt ein weiteres Ausführungsbeispiel eines Kraftabtriebsmittels 09 dar, bei dem mittels einer Wurzelpunktsplittung sowohl eine gemeinsame lineare Verfahrbarkeit in Z-Richtung 06 als auch zwei auf verschiedenen Rotationsachsen 12 stattfindende rotatorische Kraftabtriebsbewegungen 08 bereitgestellt werden können. Hierzu wird die gemeinsame lineare Z-Verfahrbarkeit der beiden Drehhubspindeln 17 durch eine Antriebseinrichtung auf einer ersten Antriebsebene 23 mittels Bewegung eines Antriebsriemens 21 in eine Kraftübertragungsbewegungsrichtung R1 32 bewerkstelligt. In einer zweiten Antriebsebene 24 und einer weiteren Antriebsebene 31 erzeugen Antriebsriemen 21 mittels Antriebsbewegungen R2, R3 32 rotatorische Kraftabtriebsbewegungen 08 zur getrennten Rotation der Drehhubspindeln 33. Somit lassen sich in der dargestellten Konfiguration des Kraftabtriebsmittels 09 eine gemeinsame lineare Verfahrbarkeit beider Drehhubspindeln 33 in Z-Richtung 06 und zwei rotatorische Kraftabtriebsbewegungen 08 unabhängig voneinander mittels dreier Antriebseinrichtungen bereitstellen.

Schließlich zeigt Fig. 14 anlehnend an das in Fig. 9a dargestellte Ausführungsbeispiel eines K-Aufbaus einer Antriebseinrichtung eine Antriebseinrichtung 02, die in einer Antriebsachsenrichtung Lx 06 verfahrbar ist und eine Abtriebsbewegung 08 in einer um 90° gegenüber der Antriebsebene verdrehten Rotationsachse 12 durch einen gedrehten Antriebsriemen 21 aufweist. Durch die Verdrehung des Antriebsriemens 21 kann die rotierende Abtriebsbewegung 08 in eine Schwenkbewegung gewandelt werden. Hierbei wird der Antriebsriemen 21 an einer Stelle um 90° gedreht, wodurch eine gedrehte rotierende Antriebsbewegung 08 entsteht. Damit kann die dritte Dimension des Koordinatensystems für die Abtriebsbewegung 08 erschlossen werden.

Schließlich Fig. 15 eine Scherenhubantriebsvorrichtung 01 eines massearmen Robotiksystems, die drei Schlitten 19 umfasst und mittels dreier Antriebseinrichtungen, die auf drei Antriebsebenen 23, 24, 31 angeordnet sind, in X-Y und Z-Richtung verfahrbar betrieben werden kann. Die auf den Antriebsebenen 23, 24 angeordneten Antriebsriemen 21 dienen zur Y 1 -Y2-Verfahrbarkeit der beiden Schlitten S1, S2 19 gegeneinander. Mittels einer kombinierten Bewegung R2, R3 32 der Antriebsriemen 21 vollziehen die beiden Schlitten S1, S2 05, 19 eine gleichgerichtete Y-Verschiebung, während bei einer gegenläufigen Verfahrung R2, R2 die beiden Schlitten S1, S2 19 sich relativ zueinander entfernen bzw. annähern. Ein dritter Schlitten S3 ist an die beiden Schlitten S1, S2 05, 19 mittels Hubstangen 34 und Drehhubstangen 35 gekoppelt und kann aufgrund der gemeinsamen gleichgerichteten Bewegung der beiden Schlitten S1, S2 sowohl in X-Richtung, als auch in Y-Richtung bewegt werden. In der weiteren Antriebsebene 31 dient hierbei eine weitere Antriebseinrichtung zur X-Verfahrbarkeit 26 der Gesamtanordnung der Schlitten S1, S2 und S3 19. Der dritte Schlitten S3 19 kann aufgrund einer gegenläufigen Y1-Y2 Bewegung der beiden Schlitten S1, S2 19 in Z-Richtung 06 abgesenkt oder angehoben werden.

Alle Antriebseinrichtungen der drei Antriebsebenen23, 24 und 31 beruhen auf dem RL-Prinzip und können somit unabhängig voneinander rotatorische Kraftabtriebsbewegungen 08 bereitstellen. Die Antriebseinrichtung der ersten Antriebsebene 24 und der weiteren Antriebsebene 31 erzeugen mittels einer Hohlwellenanordnung 14 und einer Wurzelpunktsplittung auf dem Schlitten S1 19 zwei rotationsachsengetrennte Kraftabtriebsbewegungen A, B 08, die mittels Drehhubspindel 35 auf den Schlitten S3 überführt werden. Die Antriebseinrichtung der ersten Antriebsebene 21 stellt mittels einer weiteren Antriebswelle 22 eine dritte rotatorische Kraftabtriebsbewegung C 08 auf dem Schlitten S3 19 zur Verfügung. Somit stellt die Scherenhubantriebsvorrichung 01 sowohl eine lineare X- als auch eine Y- und Z-Verfahrbarkeit des Schlittens S3 19 neben dreier rotatorischer Abtriebsbewegungen A, B und C 08 zur Verfügung. Hierzu werden drei Schlitten S1, S2, S3 19 verwendet, wobei die lineare Z-Bewegung über den Scherenaufbau durch den relativen Y1/Y2-Abstand der beiden Schlitten S1 und S2 19 erzeugt wird, der über die Antriebseinrichtungen der zweiten und der weiteren Antriebsebene beeinflusst werden kann. Die rotierenden Bewegungen werden mittels Drehhubstangen 35 nach unten auf die Greiferplatte des Schlittens S3 geleitet. Die rotatorischen Kraftabtriebsbewegungen A, B 08 werden über eine Hohlwellenanordnung 14 aus den Kraftübermittelbewegungsrichtungen R1, R2 32 der zweiten und der weiteren Antriebsebene 24, 31 extrahiert.

Aufgrund des erfinderischen Antriebskonzepts der Antriebsvorrichtungen werden Massen, insbesondere Antriebseinheiten wie Motoren außerhalb bewegter Teile montiert und die Übertragung mittels Kraftübertragungsmittel, insbesondere Zahnriemen auf die bewegten Schlittenanordnungen überführt. Eine Kombination von Bewegungen zweier Antriebseinheiten erzeugt ein RL-Prinzip und lässt sich mittels Kaskadierung auf mehrere Ebenen und Antriebsachsenrichtungen erweitern. Dabei sinkt das Trägheitsmoment durch die Masseverlegung. Als Vorteil ergibt sich eine höhere Beschleunigung, die höhere Verfahrgeschwindigkeiten und damit eine höhere Durchflussrate bei der Produktion ermöglichen. Dabei können zusätzliche Maschinen eingespart werden. Im Vergleich zu üblichen Roboterantriebsvorrichtungen können leistungsärmere Motoren eingesetzt und hierdurch die Energieaufnahme verringert werden. Da keine elektrischen Kabelverbindungen in bewegte Teile der Vorrichtung verlegt werden müssen, treten keine Kabelbrüche oder Schleppketten auf, so dass elektrische Fehlerquellen verringert werden. Durch Verwendung von wartungsfreien Riemen kann auf wartungsintensive Pneumatik oder Hydraulik verzichtet werden, so dass keine undichten Zylinder, Schläuche oder Ventile auftreten können. Hierdurch sinken Stillstandszeiten durch aufwendige Reparaturen. Somit ermöglicht die Umsetzung des erfinderischen Konzepts in einem Robotiksystem die Senkung von Anschaffungskosten, ermöglicht niedrige Betriebs- und Wartungskosten und einen verminderten Energieverbrauch. Durch die lineare Verfahrbarkeit können rechteckige Arbeitsbereiche bei geringem Platzbedarf abgedeckt werden. Eine hohe Arbeitsleistung bis zu einer Gewichtsklasse über 40kg ist erreichbar, wobei auf einen Anschlag von Rotationsachsen und eine dementsprechende Sensorik verzichtet werden kann. Durch eine modulare Ausbaustufe, die pro Antriebsriemen zwei Bewegungsachsen bereitstellen kann, ist eine erweiterbare Antriebsvorrichtung zur Verfügung gestellt, die mittels Standard-Automatisierungskomponenten realisiert werden kann. Sie eignet sich vorzüglich für einen Einsatz im explosionsgeschützten Bereich.

### Bezugszeichenliste

- 01: Antriebsvorrichtung
- 02: Antriebseinrichtung
- 03: Antriebseinheit
- 04: Trägeranordnung
- 05: Schlittenanordnung
- 06: Antriebsachsenrichtung / Verfahrrichtung
- 07: Freilaufachsenrichtung
- 08: Rotatorische Kraftabtriebsbewegung
- 09: Kraftabtriebsmittel
- 10: Kraftübertragungsmittel
- 11: Umlenkeinheit
- 12: Rotationsachse
- 13: Trägerebene
- 14: Hohlwellenanordnung
- 15: Aggregatmittel
- 16: Werkzeugeinrichtung
- 17: Dreh-Hubeinrichtung
- 18: Alternative Anordnungsmöglichkeit einer Antriebseinheit
- 19: Schlitten
- 20: Träger
- 21: Antriebsriemen
- 22: Antriebswelle
- 23: Erste Antriebsebene
- 24: Zweite Antriebsebene
- 25: Erste Antriebsachsenrichtung
- 26: zweite Antriebsachsenrichtung
- 27: Antriebsbewegung
- 28: Antriebseinrichtung mit festgelegtem Kraftübertragungsmittel
- 29: Antriebseinrichtung mit einer Antriebseinheit
- 30: Umlenkrolle
- 31: weitere Antriebsebene
- 32: Kraftübertragungsmittelbewegungsrichtung
- 33: Drehhubspindel
- 34: Hubstange
- 35: Drehhubstange
- 36: Festlegung

## Patentansprüche

1. Antriebsvorrichtung (01) für ein massearmes Robotiksystem, umfassend eine feststehende Trägeranordnung (04, 20) und zumindest zwei Antriebseinrichtungen (02) mit einer gemeinsamer Schlittenanordnung (05), die in zumindest einer Antriebsachsenrichtung (06) längsverschieblich verfahrbar angeordnet ist, wobei jede Antriebseinrichtung (02) ein Kraftübertragungsmittel (10), zwei Antriebseinheiten (03) und zumindest ein an der Schlittenanordnung (05) angeordnetes rotierbares Kraftabtriebsmittel (09) umfasst, wobei an der Trägeranordnung (04, 20) die Antriebseinheiten (03) stationär angeordnet sind,, und die Antriebseinheiten (03) jeder Antriebseinrichtung (02) mittels des in sich geschlossenen Kraftübertragungsmittels (10) miteinander und mit dem Kraftabtriebsmittel (09) über eine oder mehrere Umlenkeinheiten (11) verbunden sind, wobei mittels einer kombinierten Antriebsbewegung der Antriebseinheiten (03) eine lineare Verfahrbewegung der Schlittenanordnung (05) entlang der Antriebsachse (06) und/oder eine rotatorische Abtriebsbewegung (08) des Kraftabtriebsmittels (09) um eine Rotationsachse (12) erzeugbar ist, wobei die
gameinsame Schlittenanordnung (05) bezüglich jeder Antriebseinrichtung (02) in einer ersten Freilaufachsenrichtung (07), insbesondere in einer zur Antriebsachsenrichtung (06) im Wesentlichen rechtwinkligen Freilaufachsenrichtung (07) gegenüber der Trägeranordnung (04, 20) freilaufend verschiebbar ist, wobei die zumindest zwei Antriebseinrichtungen (02) auf der Trägeranordnung (04, 20) kaskadiert sind und deren Kraftübertragungsmittel (10) zumindest die gemeinsame Schlittenanordnung (05) antreiben, so dass Verfahrbewegungen zumindest entlang einer X-Y-Antriebsachsenrichtung durchführbar sind.

2. Vorrichtung nach Anspruch 1,
**dadurch gekennzeichnet,**
**dass** die beiden Antriebseinheiten (03) jeder Antriebseinrichtung (02) am gleichen Ende oder an entgegengesetzten Enden der Trägeranordnung (04, 20) bezüglich eines Verfahrweges der Schlittenanordnung (05) entlang der Antriebsachenrichtung (06) angeordnet sind.

3. Vorrichtung nach Anspruch 1 oder 2,
**dadurch gekennzeichnet,**
**dass** die Schlittenanordnung (05) jeder Antriebseinrichtung (02) in eine zweite Freilaufachsenrichtung (07), insbesondere in einer zur Antriebsachsenrichtung (06) und zur ersten Freilaufachsenrichtung (07) im Wesentlichen rechtwinkligen Freilaufachsenrichtung (07), gegenüber der Trägeranordnung (04, 20) freilaufend verschiebbar ist.

4. Vorrichtung nach einem der vorangegangenen Ansprüche,
**dadurch gekennzeichnet,**
**dass** das Kraftabtriebsmittel (09) mit einer Greifereinrichtung zur Betätigung zumindest einzelner Funktionen der Greifereinrichtung angeschlossen ist; und/oder
**dass** das Kraftabtriebsmittel (09) mit einem Aggregatmittel (15), insbesondere einem Stromgenerator, einer Druckluftpumpe, einer Vakuumerzeugungspumpe oder Ähnliches, zum Antrieb des Aggregatmittels (15) angeschlossen ist; und/oder
**dass** das Kraftabtriebsmittel (09) mit einer Werkzeugeinrichtung (16) zur Ausführung zumindest einer Werkzeugbewegung, insbesondere einer rotatorischen und/oder linearen Werkzeugbewegung, wie Bohren, Schleifen, Polieren oder Ähnliches, angeschlossen ist; und/oder dass das Kraftabtriebsmittel (09) mit einer Linearbewegungseinrichtung, insbesondere einer Hubspindel, zur Umsetzung einer Rotationsin eine Linearbewegung, insbesondere zur linearen Verfahrbahrkeit zumindest eines Teils der Schlittenanordnung (05) in einer weiteren Antriebsachsenrichtung (06, 26), angeschlossen ist.

5. Vorrichtung nach einem der vorangegangenen Ansprüche
**dadurch gekennzeichnet,**
**dass** die Kraftübertragungsmittel (10) der Antriebseinrichtungen (02) bezüglich einer Ebene (13) der Trägeranordnung (04, 20) nebeneinander und/oder übereinander, insbesondere in einer SandwichBauweise kaskadierbar, angeordnet sind.

6. Vorrichtung nach einem der vorangegangenen Ansprüche,
**dadurch gekennzeichnet,**
**dass** die mindestens zwei Kraftabtriebsmittel (09) bezüglich einer gemeinsamen Rotationsachse (12), insbesondere mittels einer Hohlwellenanordnung (14), eine kombinierbare Antriebsbewegung zum Betrieb eines oder mehrer Werkzeug- (16) oder Greifereinrichtungen und/oder einer oder mehrerer weiterer Antriebseinrichtungen (02), bereitstellen können; und/oder
**dass** die mindestens zwei Kraftabtriebsmittel (09) mittels einer Dreh-Hubeinrichtung (17), insbesondere einer Drehhubspindel (33) oder einer Drehhubstange (35), eine kombinierbare lineare und rotatorische Antriebsbewegung bereitstellen können.

7. Vorrichtung nach einem der vorangegangenen Ansprüche,
**dadurch gekennzeichnet,**
**dass** die Vorrichtung eine Trägerebene (13) der Trägeranordnung (04) und zumindest zwei Antriebsebenen (23, 24) der Schlittenanordnung (05) umfasst.

8. Vorrichtung nach einem der vorangegangenen Ansprüche,
**dadurch gekennzeichnet,**
**dass** die Vorrichtung zumindest eine weitere Antriebseinrichtung (28, 29) mit einem festgelegten Kraftübertragungsmittel (10) und/oder mit einer Antriebseinheit (03) umfasst.

9. Vorrichtung nach einem der vorangegangenen Ansprüche,
**dadurch gekennzeichnet,**
**dass** die Vorrichtung zur Bereitstellung einer zweiachsigen Verfahrbarkeit und einer Scherenhubfunktion bezüglich einer dritten Achse (06) drei Antriebseinrichtungen (02, 28, 29) und zwei Schlitten (19) als Schlittenanordnung (05) umfasst, wobei eine erste Antriebseinrichtung (02, 28, 29) eine lineare X-Verfahrbarkeit der beiden Schlitten (19) und eine zweite und eine dritte Antriebseinrichtung (02, 28, 29) eine Y1- bzw. Y2-Verfahrbarkeit der Schlitten (19) zur Bereitstellung einer linearen Y- und Z-Verfahrbarkeit sowie zur Bereitstellung zumindest einer rotatorischen Abtriebsbewegung (08) umfasst.

10. Antriebsverfahren zum Betrieb einer Antriebsvorrichtung (01) nach einem der vorangegangenen Ansprüche,
**gekennzeichnet dadurch,**
**dass** die beiden Antriebseinheiten (03) zumindest einer Antriebseinrichtung (02) durch im Wesentlichen synchrone Antriebsbewegungen (27), insbesondere durch im Wesentlichen gleichsinnige und gegensinnige synchrone Antriebsbewegungen (27), sowohl eine lineare Verfahrung der Schlittenanordnung (05) entlang zumindest einer Antriebsachsenrichtung (06, 26) als auch eine rotatorische Abtriebsbewegung (08) des zumindest einen Kraftabtriebsmittels (09) bewirken.

11. Antriebsverfahren nach Anspruch 10,
**dadurch gekennzeichnet,**
**dass** synchrone Antriebsbewegungen der Antriebseinheiten (03) zumindest einer Antriebseinrichtung (02, 28, 29) eine isolierte lineare Verfahrung und/oder eine isolierte rotatorische Abtriebsbewegung (08) des zumindest einen Kraftabtriebsmittels (09) bewirken.

## Claims

1. A drive device (01) for a low-weight robotics system, comprising a stationary carrier arrangement (04, 20) and at least two drive apparatuses (02) with a common slide arrangement (05) which is arranged so as to be longitudinally movable in at least one drive axis direction (06), wherein each drive apparatus (02) comprises a force transmission means (10), two drive units (03) and at least one rotatable force output means (09) arranged on the slide arrangement (05), wherein the drive units (03) are stationarily arranged on the carrier arrangement (04, 20), and the drive units (03) of each drive apparatus (02) are connected to each other by means of a self-contained force transmission means (10) and to the force output means (09) via one or a plurality of deflecting units (11), wherein by means of a combined drive motion of the drive units (03), a linear motion of the slide arrangement (05) along the drive axis (06) and/or a rotational drive motion (08) of the force output means (09) about a rotational axis (12) can be generated, wherein the common slide arrangement (05), with regard to each drive apparatus (02), is movable relative to the carrier arrangement (04, 20) in a freewheeling manner in a first freewheel axis direction (07), in particular in a freewheel axis direction (07) substantially perpendicular to the drive axis direction (06), wherein the at least two drive units (02) are cascaded on the carrier arrangement (04, 20) and their force transmission means (10) drive at least the common slide arrangement (05) so that movements can be carried out at least along a X-Y drive axis direction.

2. The device according to claim 1,
**characterised in**
**that** the two drive units (03) of each drive apparatus (02) are arranged at the same end or at opposite ends of the carrier arrangement (04, 20) with regard to a travel distance of the slide arrangement (05) along the drive axis direction (06).

3. The device according to claim 1 or claim 2,
**characterised in**
**that** the slide arrangement (05) of each drive apparatus (02) is movable relative to the carrier arrangement (04, 20) in a freewheeling manner in a second freewheel axis direction (07), in particular in a freewheel axis direction (07) substantially perpendicular to the drive axis direction (06) and to the first freewheel axis (07).

4. The device according to any one of the preceding claims,
**characterised in**
**that** the force output means (09) is connected with a gripper apparatus so as to actuate at least individual functions of the gripper apparatus; and/or
**that** the force output means (09) is connected with an aggregate means (15), in particular a current generator, a compressed air pump, a vacuum pump or the like, so as to drive the aggregate means (15); and/or
**that** the force output means (09) is connected with a tool apparatus (16) so as to carry out at least one tool motion, in particular a rotational and/or linear tool motion, such as drilling, grinding, polishing or the like; and/or that the force output means (09) is connected with a linear motion apparatus, in particular a lifting spindle, so as to transform a rotational motion into a linear motion, in particular for linear movability of a part of the slide arrangement (05) in a further drive axis direction (06, 26).

5. The device according to any one of the preceding claims,
**characterised in**
**that** with regard to a plane (13) of the carrier arrangement (04, 20), the force transmission means (10) of the drive apparatuses (02) are arranged next to each other and/or on top of each other, in particular in a cascadable manner in a sandwich construction.

6. The device according to any one of the preceding claims,
**characterised in**
**that** with regard to a common rotational axis (12), in particular by means of a hollow shaft arrangement (14), the two force output means (09) can provide a combinable drive motion for operating one or a plurality of tool apparatuses (16) or gripper apparatuses and/or one or a plurality of further drive apparatuses (02); and/or
**that** by means of a rotary-lifting apparatus (17), in particular a rotary-lifting spindle (33) or a rotary-lifting rod (35), the at least two force output means (09) can provide a combinable linear and rotational drive motion.

7. The device according to any one of the preceding claims,
**characterised in**
**that** the device comprises a carrier plane (13) of the carrier arrangement (04) and at least two drive planes (23, 24) of the slide arrangement (05).

8. The device according to any one of the preceding claims,
**characterised in**
**that** the device comprises at least one further drive apparatus (28, 29) with a fixed force transmission means (10) and/or with a drive unit (03).

9. The device according to any one of the preceding claims,
**characterised in**
**that** for providing biaxial movability and a scissors lifting function with regard to a third axis (06), the device comprises three drive apparatuses (02, 28, 29) and two slides (19) as a slide arrangement (05), wherein a first drive apparatus (02, 28, 29) comprises linear X-movability of the two slides (19), and a second and a third drive apparatus (02, 28, 29) comprise Y1- and Y2-movabilty of the slides (19), respectively, for providing a linear Y- and Z-movability and for providing at least one rotational output motion (08).

10. A drive method for operating a drive device (01) according to any one of the preceding claims,
**characterised in**
**that** by means of substantially synchronous drive motions (27), in particular by means of substantially synchronous drive motions (27) in the same and in the opposite directions, the two drive units (03) of at least one drive apparatus (02) effect a linear movement of the slide arrangement (05) along at least one drive axis direction (06, 26) as well as a rotational output motion (08) of the at least one force output means (09).

11. The drive method according to claim 10,
**characterised in**
**that** synchronous drive motions of the drive units (03) of at least one drive apparatus (02, 28, 29) effect an isolated linear movement and/or an isolated rotational output motion (08) of the at least one force output means (09).

## Revendications

1. Dispositif d'entraînement pour un système de robotique de faible poids, comprenant un agencement porteur (04, 20) fixe et au moins deux installations d'entraînement (02) comportant un agencement de chariot commun (05) qui est monté de manière à pouvoir se déplacer longitudinalement dans au moins une direction d'axe d'entraînement (06), chaque installation d'entraînement (02) comprenant un moyen de transmission de force (10), deux unités d'entraînement (03) et au moins un moyen de sortie de force (09) rotatif monté sur l'agencement de chariot (05), dans lequel les unités d'entraînement (03) sont montées fixes sur l'agencement porteur (04, 20) et les unités d'entraînement (03) de chaque installation d'entraînement (02) sont reliées entre elles et avec le moyen de sortie de force (09), à l'aide du moyen de transmission de force (10) intrinsèquement clos, et par l'intermédiaire d'une ou plusieurs unités de renvoi (11), dans lequel, au moyen d'un mouvement d'entraînement combiné des unités d'entraînement (03), peuvent être produits un mouvement linéaire de translation de l'agencement de chariot (05) le long de l'axe d'entraînement (06) et/ou un mouvement rotatif de sortie (08) du moyen de sortie de force (09) autour d'un axe de rotation (12), dans lequel l'agencement de chariot (05) commun est apte à se déplacer en roue libre par rapport à chacune des installations d'entraînement (02) dans une première direction d'axe de roue libre (07), en particulier dans une direction d'axe de roue libre (07) sensiblement perpendiculaire à la direction de l'axe d'entraînement (06) vis-à-vis de l'agencement porteur (04, 20), dans lequel lesdites au moins deux installations d'entraînement (02) sont montées en cascade sur l'agencement porteur (04, 20) et leurs moyens de transmission de force (10) entraînent au moins l'agencement de chariot (05) commun, si bien qu'il est possible d'effectuer des mouvements de translation au moins dans une direction d'axe d'entraînement X-Y.

2. Dispositif selon la revendication 1,
**caractérisé en ce que**
les deux unités d'entraînement (03) de chacune des installations d'entraînement (02) sont implantées sur la même extrémité ou sur des extrémités opposées de l'agencement porteur (04, 20) par rapport à une course de l'agencement de chariot (05) le long de l'axe d'entraînement (06).

3. Dispositif selon l'une des revendications 1 ou 2,
**caractérisé en ce que**
l'agencement de chariot (05) de chacune des installations d'entraînement (02) est apte à se déplacer en roue libre par rapport à l'agencement porteur (04, 20) dans une deuxième direction d'axe de roue libre (07), en particulier dans une direction d'axe de roue libre (07) sensiblement perpendiculaire à la direction de l'axe d'entraînement (06) et à la première direction de l'axe de roue libre (07).

4. Dispositif selon l'une des revendications précédentes,
**caractérisé**
**en ce que** le moyen de sortie de force (09) est raccordé à un dispositif à pinces afin de commander au moins certaines fonctions du dispositif à pinces ; et/ou
**en ce que** le moyen de sortie de force (09) est raccordé à un groupe (15), en particulier un générateur électrique, une pompe pneumatique, une pompe à vide ou similaire, afin d'entraîner le groupe (15) ; et/ou
**en ce que** le moyen de sortie de force (09) est raccordé à un dispositif à outil (16) afin d'exécuter au moins un mouvement d'outil, en particulier un mouvement rotatoire et/ou linéaire d'outil, tel que le perçage, la rectification, le polissage ou similaire ; et/ou
**en ce que** le moyen de sortie de force (09) est raccordé à un dispositif à mouvement linéaire, en particulier une broche de levage, afin de convertir un mouvement de rotation en un mouvement linéaire, en particulier afin de pouvoir déplacer linéairement au moins une partie de l'agencement de chariot (05) dans une autre direction d'axe d'entraînement (06, 26).

5. Dispositif selon l'une des revendications précédentes,
**caractérisé en ce que**
les moyens de transmission de force (10) des installations d'entraînement (02) sont montés de manière juxtaposée ou superposée par rapport à un plan (13) de l'agencement porteur (04, 20), en particulier peuvent être mis en cascade dans une construction en sandwich.

6. Dispositif selon l'une des revendications précédentes,
**caractérisé**
**en ce que** lesdits au moins deux moyens de sortie de force (09), par rapport à un axe de rotation commun (12), en particulier à l'aide d'un agencement à arbre creux (14), peuvent fournir un mouvement d'entraînement pouvant être combiné pour faire fonctionner un ou plusieurs dispositifs à outil (16) ou à pince et/ou une ou plusieurs autres installations d'entraînement (02) ; et/ou
**en ce que** lesdits au moins deux moyens de sortie de force (09), à l'aide d'un dispositif de levage et de rotation (17), en particulier une broche de levage et de rotation (33) ou une tige de levage et de rotation (35), peuvent fournir un mouvement d'entraînement linéaire et circulaire pouvant être combiné.

7. Dispositif selon l'une des revendications précédentes,
**caractérisé en ce que**
le dispositif comprend un plan de support (13) de l'agencement porteur (04) et au moins deux plans d'entraînement (23, ; 24) de l'agencement de chariot (05).

8. Dispositif selon l'une des revendications précédentes,
**caractérisé en ce que**
le dispositif comprend au moins une autre installation d'entraînement (28, 29) avec un moyen de transmission de force (10) fixe et/ou avec une unité d'entraînement (03).

9. Dispositif selon l'une des revendications précédentes,
**caractérisé en ce que**
le dispositif, afin de fournir une capacité de déplacement sur deux axes et une fonction de levage à ciseaux par rapport à un troisième axe (06), comprend trois installations d'entraînement (02, 28, 29) et deux chariots (19) formant l'agencement de chariot (05), dans lequel une première installation d'entraînement (02, 28, 29) fournit une capacité de déplacement linéaire sur X des deux chariots (19) et une deuxième et une troisième installation d'entraînement (02, 28, 29) fournissent une capacité de déplacement Y1 et Y2 des chariots (19) afin d'assurer une capacité de déplacement linéaire sur Y et Z et de fournir au moins un mouvement rotatoire d'entraînement (08).

10. Procédé d'entraînement pour le fonctionnement d'un dispositif d'entraînement (01) selon l'une des revendications précédentes,
**caractérisé en ce que**
les deux unités d'entraînement (03) d'au moins une des installations d'entraînement (02), grâce à des mouvements d'entraînement (27) sensiblement synchrones, en particulier grâce à des mouvements d'entraînement (27) sensiblement synchrones dans le même sens et en sens opposé, fournissent à la fois un déplacement linéaire de l'agencement de chariot (05) sur au moins un axe d'entraînement (06, 26) et un mouvement d'entraînement rotatoire (08) dudit au moins un moyen de sortie de force (09).

11. Procédé d'entraînement selon la revendication 10,
**caractérisé en ce que**
des mouvement d'entraînement synchrones des unités d'entraînement (03) d'au moins l'une des installations d'entraînement (02, 28, 29) fournissent un déplacement linéaire isolé et/ou un mouvement d'entraînement rotatoire isolé (08) dudit au moins un moyen de sortie de force (09).
